# EUROPEAN PATENT APPLICATION

(11) **EP 4 797 747 A1**
(43) Date of publication of application: **26.08.2026**
(21) Application number: 24886350.8
(22) Date of filing: 01.11.2024
(51) Int. Cl.: H04W 8/24, H04W 8/18, H04W 88/06, H04W 24/08, H04W 76/30

(54) **METHOD AND DEVICE FOR TRANSMITTING INFORMATION RELATED TO TERMINAL CAPABILITY BY TERMINAL IN MOBILE COMMUNICATION SYSTEM**

(30) Priority: 02.11.2023 KR 20230150111
(71) Applicant: Samsung Electronics Co., Ltd., Suwon-si, Gyeonggi-do 16677 (KR)
(72) Inventor: JUNG, Sangyeob, Suwon-si Gyeonggi-do 16677 (KR)
(74) Representative: Gulde & Partner
(86) International application number: PCT/KR2024/017043
(87) International publication number: WO 2025/095679

(57) **Abstract**

The present disclosure relates to a 5G or 6G communication system for supporting a higher data transmission rate. A method performed by a user equipment (UE) in a wireless communication system may comprise receiving a radio resource control (RRC) message including needForGAPSConfigNR information from a base station; identifying that the UE is configured to provide measurement gap information of at least one target new radio (NR) band in case that the needForGAPSConfigNR information is set to setup; transmitting first UEAssistanceInformation including first measurement gap information to the base station; and when the UE is configured to provide the measurement gap information of the at least one target NR band and current measurement gap information is different from the first measurement gap information, transmitting second UEAssistanceInformation including the current measurement gap information to the base station, wherein the needForGapsConfigNR information includes information on the at least one target NR band.

## Description

### [Technical Field]

The disclosure relates to a wireless communication system and, more specifically, to a method and device for transmitting information related to a terminal capability by a terminal in a mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Provided according to an embodiment of the disclosure are a device and a method capable of effectively providing services in a mobile communication system.

### [Solution to Problem]

According to an embodiment of the disclosure, a method performed by a user equipment (UE) in a wireless communication system may include receiving, from a base station, a radio resource control (RRC) message including needForGapsConfigNR information, in case that the needForGapsConfigNR information is set to setup, identifying that the UE is configured to provide measurement gap information of the at least one target NR band, transmitting first UEAssistanceInformation including first measurement gap information to the base station, and in case that the UE is configured to provide measurement gap information of the at least one target NR band and current measurement gap information is different from the first measurement gap information, transmitting second UEAssistanceInformation including the current measurement gap information to the base station, wherein the needForGapsConfigNR information includes information on at least one target new radio (NR) band.

### [Advantageous Effects of Invention]

According to an embodiment of the disclosure, a device and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

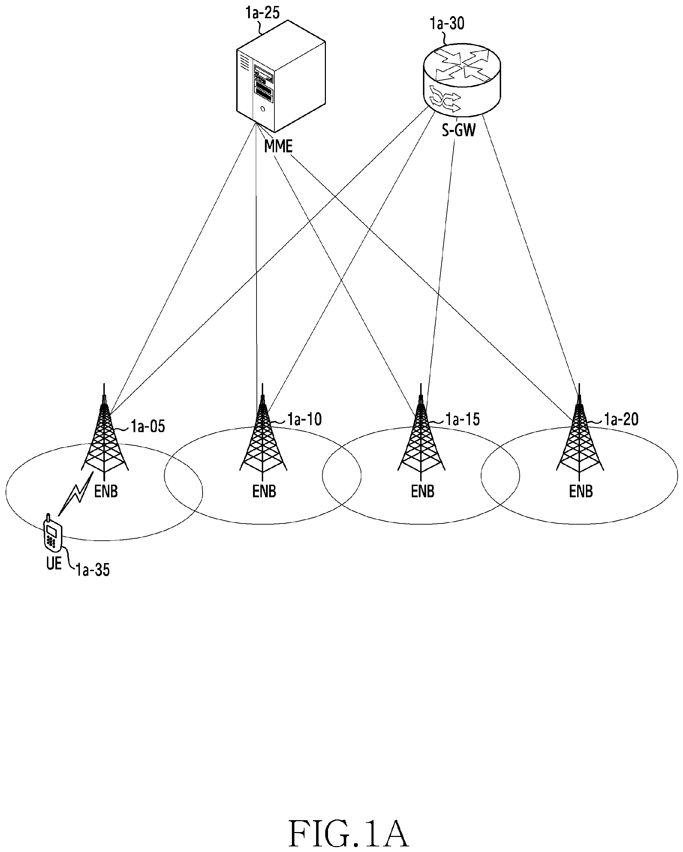

FIG. 1A illustrates a structure of a long term evolution (LTE) system according to an embodiment.

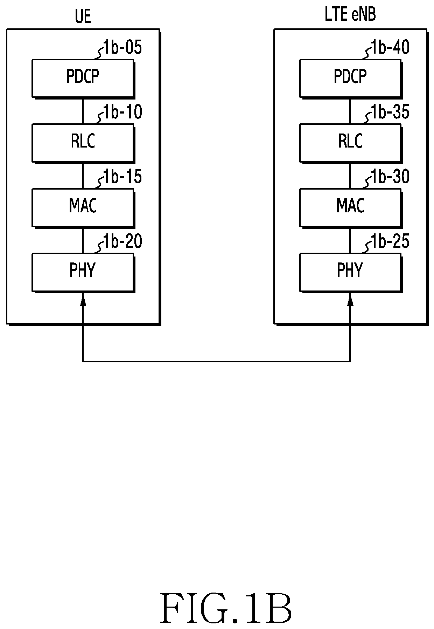

FIG. 1B illustrates a radio protocol structure in an LTE system according to an embodiment.

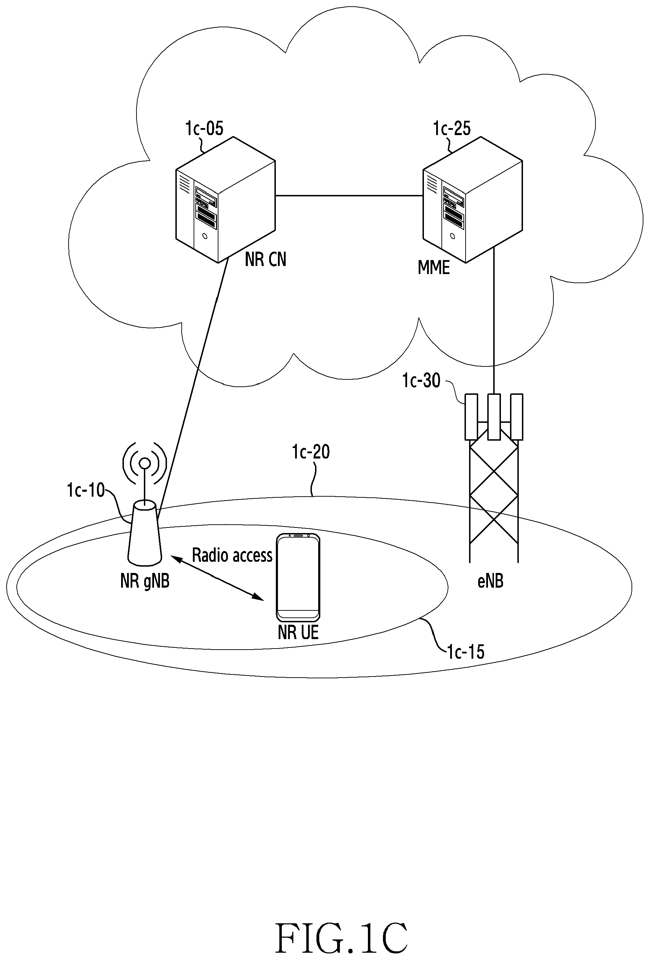

FIG. 1C illustrates a structure of a mobile communication system according to an embodiment.

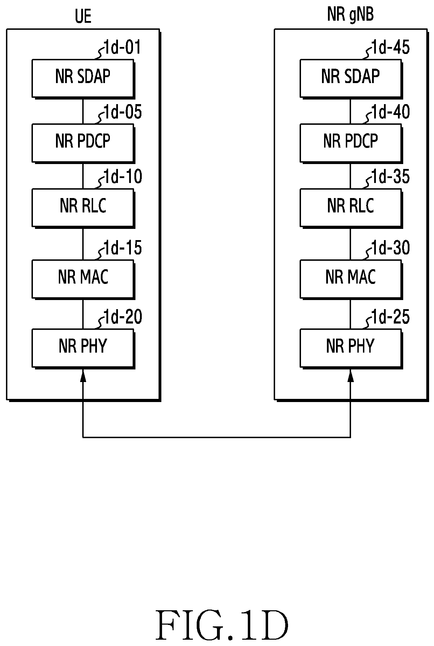

FIG. 1D illustrates a radio protocol structure of a mobile communication system according to an embodiment.

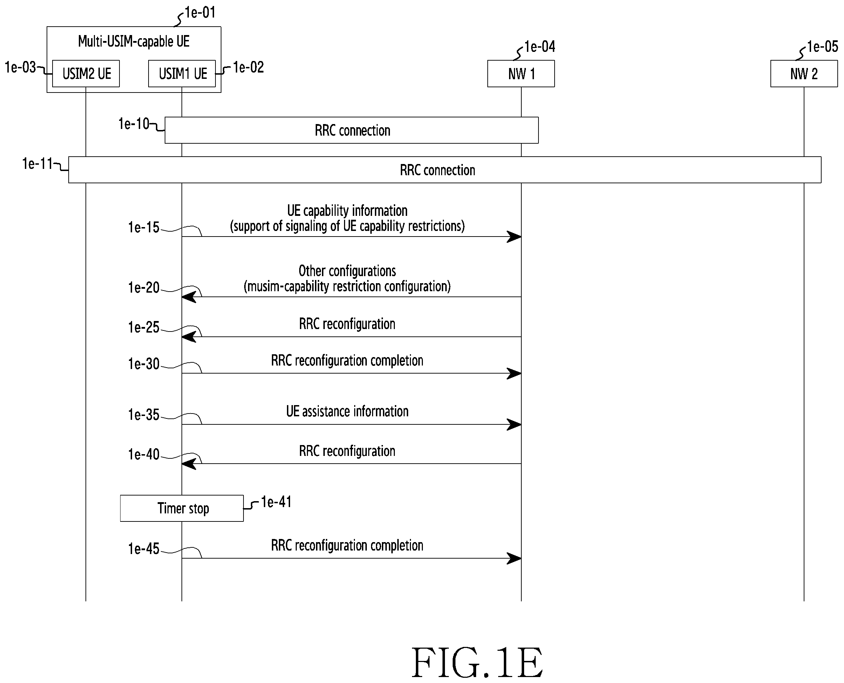

FIG. 1E is a signal flow diagram in which a terminal (multi-USIM UE, hereinafter referred to as a MUSIM UE) supporting multiple universal subscriber identity modules (USIMs) requests/provides temporary terminal (UE) capability restrictions from/to a base station according to a configuration of the base station according to an embodiment.

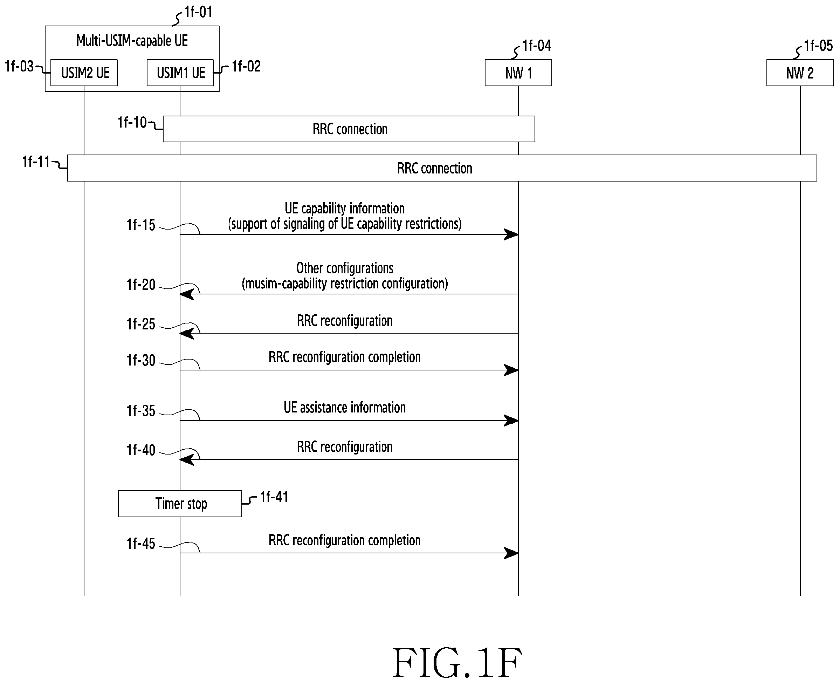

FIG. 1F is a signal flow diagram in which a terminal (multi-USIM UE, hereinafter referred to as a MUSIM UE) supporting multiple universal subscriber identity modules (USIMs) requests/provides temporary terminal (UE) capability restrictions from/to a base station according to a configuration of the base station according to an embodiment.

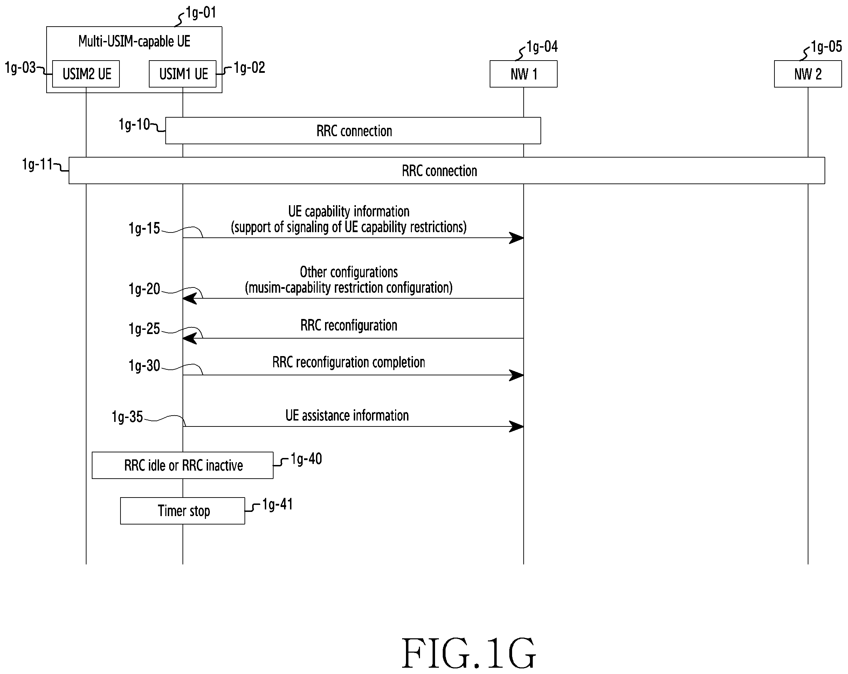

FIG. 1G is a signal flow diagram in which a terminal (multi-USIM UE, hereinafter referred to as a MUSIM UE) supporting multiple universal subscriber identity modules (USIMs) requests/provides temporary terminal (UE) capability restrictions from/to a base station according to a configuration of the base station according to an embodiment.

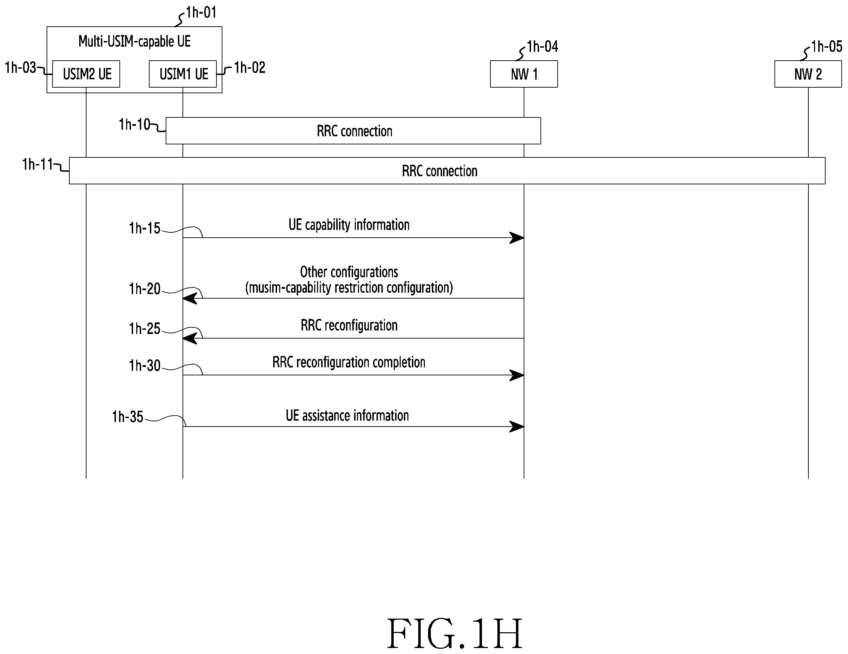

FIG. 1H is a signal flow diagram in which a terminal (multi-USIM UE, hereinafter referred to as a MUSIM UE) supporting multiple universal subscriber identity modules (USIMs) requests/provides temporary terminal (UE) capability restrictions from/to a base station according to a configuration of the base station according to an embodiment.

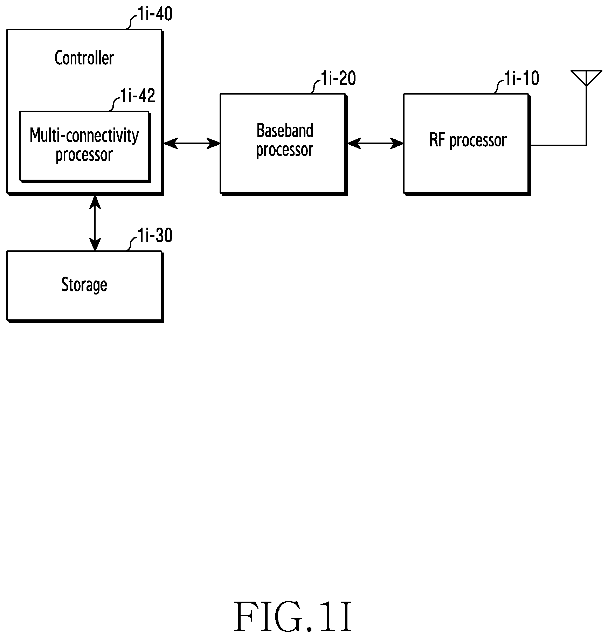

FIG. 1I is a block diagram illustrating an internal structure of a UE according to an embodiment.

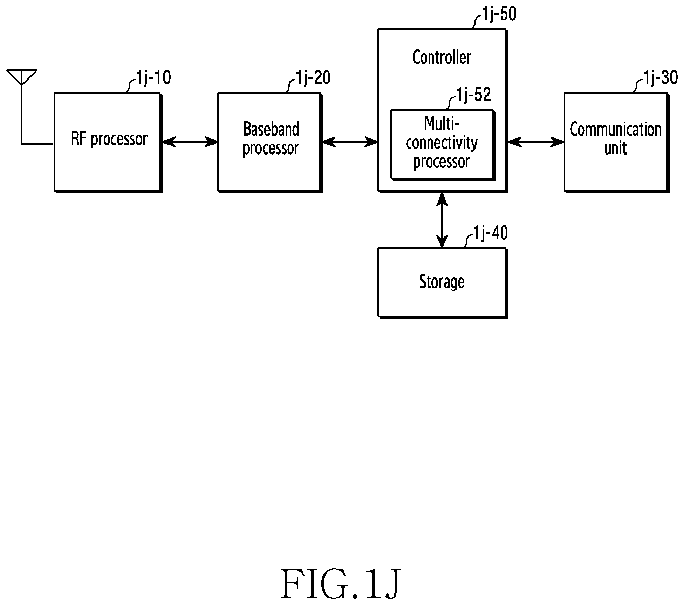

FIG. 1J is a block diagram illustrating a structure of an NR base station according to an embodiment.

### [Mode for the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Hereinafter, embodiments of the disclosure will be described with reference to the accompanying drawings.

In the following description, terms for identifying access nodes, terms referring to network entities, terms referring to messages, terms referring to interfaces between network entities, and/or terms referring to various identification information are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by the above terms and names, and may be applied in the same way to systems that conform other standards. As used herein, the term "evolved Node B (eNB)" may be interchangeably used with the term "next generation Node B (gNB)" for the sake of descriptive convenience. For example, a base station described as "eNB" may be replaced by "gNB".

FIG. 1A illustrates a structure of an LTE system according to an embodiment.

Referring to FIG. 1A, a radio access network of an LTE system according to an embodiment may include next-generation base stations (evolved Node Bs, hereinafter ENBs, node Bs, or base stations) 1a-05, 1a-10, 1a-15, and 1a-20, a mobility management entity (MME) 1a-25, and a serving gateway (S-GW) 1a-30. A user equipment (hereinafter UE or terminal) 1a-35 may access an external network through the ENBs 1a-05 to 1a-20 and the S-GW 1a-30.

According to an embodiment, in FIG. 1, the ENBs 1a-05, 1a-10, 1a-15, and 1a-20 may correspond to conventional Node Bs of the universal mobile telecommunication system (UMTS). The ENBs 1a-05, 1a-10, 1a-15, and 1a-20 may be connected to the UE 1a-35 through a radio channel, and perform more complicated roles than the conventional Node Bs. In the NR system, since all user traffic including real-time services, such as voice over IP (VoIP) via the Internet protocol, is serviced through a shared channel, a device that collects state information, such as buffer states, available transmit power states, and channel states of UEs, and performs scheduling accordingly may be required. In this case, the ENBs 1a-05 to 1a-20 may be responsible for collecting the state information and performing scheduling accordingly.

According to an embodiment, in general, one ENB may control multiple cells. For example, in order to implement a transfer rate of 100Mbps, the LTE system uses orthogonal frequency division multiplexing (hereinafter referred to as OFDM) as a radio access technology in a bandwidth of, for example, 20MHz. For example, the LTE system may employ an adaptive modulation & coding (hereinafter referred to as AMC) scheme for determining a modulation scheme and a channel coding rate according to a channel state of a UE.

According to an embodiment, the S-GW 1a-30 is a device that provides a data bearer, and may generate or remove a data bearer under the control of the MME 1a-25. For example, the MME 1a-25 is a device responsible for various control functions, as well as a mobility management function for a UE, and may be connected to multiple base stations.

FIG. 1B illustrates a radio protocol structure in an LTE system according to an embodiment.

Referring to FIG. 1B, a radio protocol of an LTE system according to an embodiment may include a packet data convergence protocol (PDCP) 1b-05 or 1b-40, a radio link control (RLC) 1b-10 or 1b-35, and a medium access control (MAC) 1b-15 or 1b-30 on each of UE and ENB sides. The packet data convergence protocol (PDCP) 1b-05 or 1b-40 is responsible for operations such as IP header compression/reconstruction. The main functions of the PDCP may include at least one of functions below.
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

According to an embodiment, the radio link control (hereinafter referred to as RLC) 1b-10 or 1b-35 may reconfigure a PDCP protocol data unit (PDU) into appropriate sizes to perform an ARQ operation or the like. For example, the main functions of the RLC may include at least one of functions below.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

According to an embodiment, the MAC 1b-15 or 1b-30 may be connected to several RLC layer devices configured in a single terminal, and multiplex RLC PDUs into an MAC PDU and demultiplex RLC PDUs from an MAC PDU. The main functions of the MAC may include one of functions below.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Hybrid automatic repeat request (HARQ) (Error correction through HARQ)
- Priority handling between logical channels of one UE
- Priority handling between UEs by means of dynamic scheduling
- Multimedia broadcast multicast service (MBMS) service identification
- Transport format selection
- Padding

According to an embodiment, an NR physical (PHY) layer 1d-20 or 1d-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

FIG. 1C illustrates a structure of a next-generation mobile communication system according to an embodiment.

Referring to FIG. 1C, a radio access network of a next-generation mobile communication system (hereinafter NR or 5G) according to an embodiment may include a next-generation base station (new radio Node B, hereinafter NR gNB or NR base station) 1c-10, and a new radio core network (NR CN) 1c-05. A user terminal (new radio user equipment, hereinafter NR UE or terminal) 1c-15 may access an external network via the NR gNB 1c-10 and the NR CN 1c-05.

According to an embodiment, the NR gNB 1c-10 may correspond to an evolved Node B (eNB) of the conventional LTE system. For example, the NR gNB may be connected to the NR UE 1c-15 through a radio channel, and provide outstanding services as compared to a conventional Node B (e.g., eNB).

According to an embodiment, in the next-generation mobile communication system, since all user traffic is serviced through a shared channel, a device that collects state information, such as buffer statuses, available transmit power states, and channel states of UEs, and performs scheduling accordingly may be required. The NR gNB 1c-10 may be responsible for collecting the state information and performing scheduling accordingly.

According to an embodiment, in general, one NR gNB may control multiple cells. In order to implement ultrahigh-speed data transfer beyond the current LTE, the next-generation mobile communication system may have a wider bandwidth than the existing maximum bandwidth. The next-generation mobile communication technology may employ an orthogonal frequency division multiplexing (hereinafter referred to as "OFDM") as a radio access technology, and may additionally integrate a beamforming technology therewith.

For example, the next-generation mobile communication system may employ an adaptive modulation & coding (hereinafter referred to as AMC) scheme for determining a modulation scheme and a channel coding rate according to a channel state of a UE. The NR CN 1c-05 may perform functions such as mobility support, bearer configuration, and QoS configuration. For example, the NR CN is a device responsible for various control functions, as well as a mobility management function for a UE, and may be connected to multiple base stations. In addition, the next-generation mobile communication system may interwork with the conventional LTE system, and the NR CN may be connected to an MME 1c-25 via a network interface. The MME may be connected to an eNB 1c-30 that is a conventional base station.

FIG. 1D illustrates a radio protocol structure of a next-generation mobile communication system according to an embodiment.

Referring to FIG. 1D, a radio protocol of a next-generation mobile communication system according to an embodiment may include an NR service data adaptation protocol (SDAP) 1d-01 or 1d-45, an NR PDCP 1d-05 or 1d-40, an NR RLC 1d-10 or 1d-35, and an NR MAC 1d-15 or 1d-30 on each of UE and NR gNB sides.

According to an embodiment, the main functions of the NR PDCP 1b-05 or 1b-40 may include at least some of functions below.
- Transfer of user plane data
- Mapping between a QoS flow and a data radio bearer (DRB) for both downlink (DL) and uplink (UL)
- Marking QoS flow ID in both DL and UL packets
- Reflective QoS flow to DRB mapping for the UL SDAP protocol data units (PDUs)

With regard to the SDAP layer device, whether to use the header of the SDAP layer device may be configured for the UE through an RRC message according to PDCP layer devices or according to bearers or according to logical channels. With regard to the SDAP layer device, whether to use functions of the SDAP layer device may be configured for the UE through an RRC message according to PDCP layer devices or according to bearers or according to logical channels. If an SDAP header is configured, the non-access stratum (NAS) QoS reflective configuration 1-bit indicator (NAS reflective QoS) and the AS QoS reflective configuration 1-bit indicator (AS reflective QoS) of the SDAP header may be indicated, so that the UE can update or reconfigure mapping information regarding the QoS flow and data bearer of the uplink and downlink. For example, the SDAP header may include QoS flow ID information indicating the QoS. For example, the QoS information may be used as data processing priority, scheduling information, etc. for smoothly supporting services.

The main functions of the NR PDCP 1d-05 or 1d-40 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

The reordering of the NR PDCP device refers to a function of reordering PDCP PDUs received from a lower layer in an order based on the PDCP sequence number (SN), and may include a function of transferring data to an upper layer in the reordered sequence. As another example, the reordering of the NR PDCP device may include a function of instantly transferring data without considering the order, and may include a function of recording PDCP PDUs lost as a result of reordering. As yet another example, the reordering of the NR PDCP device may include a function of reporting the state of the lost PDCP PDUs to the transmitting side, and may include a function of requesting retransmission of the lost PDCP PDUs.

The main functions of the NR RLC 1d-10 or 1d-35 may include at least some of functions below.
- Transfer of upper layer PDUs
- In-sequence delivery of upper layer PDUs
- Out-of-sequence delivery of upper layer PDUs
- ARQ function (error correction through ARQ)
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment, the in-sequence delivery of the NR RLC device may refer to a function of successively delivering RLC SDUs received from the lower layer to the upper layer. The out-sequence delivery of the NR RLC device may include a function of, if one original RLC SDU is segmented into multiple RLC SDUs and the segmented RLC SDUs are received, reassembling the RLC SDUs and delivering the reassembled RLC SDUs. The in-sequence delivery of the NR RLC device may include a function of rearranging received RLC PDUs, based on RLC sequence numbers (SNs) or PDCP sequence numbers (SNs). The in-sequence delivery of the NR RLC device may include a function of reordering the sequence to record lost PDCP PDUs. The in-sequence delivery of the NR RLC may include a function of transmitting a report on the state of the lost RLC PDUs to a transmitting side. The in-sequence delivery of the NR RLC may include a function of requesting retransmission of the lost PDCP PDUs. The in-sequence delivery function of the NR RLC device may include a function of, if there is a lost RLC SDU, successively delivering only RLC SDUs before the lost RLC SDU to the upper layer. The in-sequence delivery function of the NR RLC device may include a function of, if a predetermined timer has expired although there is a lost RLC SDU, successively delivering all RLC SDUs received before the timer is started, to the upper layer. The in-sequence delivery of the NR RLC device may include a function of, if a predetermined timer has expired although there is a lost RLC SDU, successively delivering all RLC SDUs received until now to the higher layer.

According to an embodiment, the NR RLC device 1d-10 or 1d-35 may process RLC PDUs in the received sequence (regardless of the sequence number order, in the sequence of arrival) and deliver same to the PDCP device regardless of the sequence (out-of-sequence delivery). In the case of segments, the NR RLC device 1d-10 or 1d-35 may receive segments stored in a buffer or to be received later, reconfigure the segments into one whole RLC PDU, process the RLC PDU, and then deliver the processed RLC PDU to the NR PDCP device. For example, the NR RLC layer may include no concatenation function, which may be performed in the NR MAC layer or replaced with a multiplexing function of the NR MAC layer.

The out-of-sequence delivery function of the NR RLC device may refer to a function of delivering RLC SDUs, received from a lower layer, to an upper layer regardless of the sequence. The out-sequence delivery of the NR RLC device may include a function of, if one original RLC SDU is segmented into multiple RLC SDUs and the segmented RLC SDUs are received, reassembling the RLC SDUs and delivering the reassembled RLC SDUs. The out-of-sequence delivery of the NR RLC device may include a function of storing RLC SNs or PDCP SNs of received RLC PDUs and arranging the sequence to record lost RLC PDUs.

According to an embodiment, the NR MAC 1b-15 or 1b-30 may be connected to multiple NR RLC layer devices configured in a single UE, and the main functions of the NR MAC may include at least some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 1d-20 or 1d-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

FIG. 1E is a signal flow diagram in which a UE (multi-USIM UE, hereinafter referred to as a MUSIM UE) supporting multiple universal subscriber identity modules (USIMs) requests and/or provides temporary UE capability restrictions from and/or to a base station according to a configuration of the base station according to an embodiment.

Referring to FIG. 1E, a MUSIM UE 1e-01 according to an embodiment may be referred to as a UE supporting multiple USIMs in a single device. In the disclosure, for the sake of description, a description based on a dual-USIM UE supporting two USIMs is provided. However, this is only an example, and the MUSIM UE of this application may support three or more USIMs.

According to an embodiment, the MUSIM UE 1e-01 may be referred to as a USIM 1 UE 1e-02 when operating in USIM 1, and may be referred to as a USIM 2 UE 1e-03 when operating in USIM 2. In this case, base stations 1e-04 and 1e-05 associated with the USIMs, respectively, may recognize the USIM 1 UE 1e-02 and the USIM 2 UE 1e-03 as separate UEs, rather than the MUSIM UE 1e-01 which is operated in the same device. For example, the base stations 1e-04 and 1e-05 may identify the USIM 1 UE 1e-02 and the USIM 2 UE 1e-03 as different UEs.

According to an embodiment, the USIM 1 UE 1e-02 and the USIM 2 UE 1e-03 may share and use hardware capability of the MUSIM UE 1e-01. Therefore, when the USIM 1 UE 1e-02 and the USIM 2 UE 1e-03 simultaneously transmit and/or receive signals with base station 1 1e-04 and base station 2 1e-05, capability of each USIM UE may be temporarily restricted by each other. For example, even if the USIM 1 UE 1e-02 and the USIM 2 UE 1e-03 are identified as separate UEs by the base stations, the USIM 1 UE 1e-02 and the USIM 2 UE 1e-03 may utilize hardware resources (e.g., an application processor (AP), a communication processor (CP), and/or a transceiver) included in a single device. In this case, when the USIM 1 UE and the USIM 2 UE simultaneously transmit and/or receive signals, a temporary restriction may occur in USIM UE capability.

According to an embodiment, in operation 1e-10, the USIM 1 UE 1e-02 may establish an RRC connection with base station 1 1e-04 and be in an RRC-connected mode (RRC_CONNECTED).

According to an embodiment, in operation 1e-11, the USIM 2 UE 1e-03 may establish an RRC connection with base station 2 1e-05 and be in an RRC-connected mode (RRC_CONNECTED).

According to an embodiment, in operation 1e-15, the USIM 1 UE 1e-02 may transmit, to base station 1 1e-04, a UE capability information message (UECapabilityInformation) containing or including capability information of the MUSIM UE 1e-01. For example, capability of the MUSIM UE 1e-01 is static, but the USIM 1 UE 1e-02 may share and use capability of the MUSIM UE 1e-01 with the USIM 2 UE 1e-03, so that capability of the USIM 1 UE 1e-02 may be temporarily restricted according to the operation of the USIM 2 UE 1e-03. That is, even if capability of the USIM 1 UE 1e-02 is static, capability of the USIM 1 UE 1e-02 may be temporarily restricted because the USIM 1 UE shares hardware with the USIM 2 UE 1e-03.

Therefore, the USIM 1 UE 1e-02 may include capability information related to such a temporary UE capability restriction in a message (e.g., UECapabilityInformation) to report and transmit the capability information to base station 1 1e-04. For example, the message (e.g., UECapabilityInformation) may include at least some of the following information.
- Information on a capability of the USIM 1 UE 1e-02 to request or provide detailed temporary UE capability restrictions from or to base station 1 1e-04 via a predetermined RRC message (e.g., UEAssistanceInformation)
   * A capability of USIM 1 UE 1e-02 to transmit, to base station 1 1e-04 according to a configuration of base station 1 1e-04, a predetermined RRC message including preference information (e.g., information related to a specific temporary UE capability restriction) for changing some information currently configured by base station 1 1e-04 for the USIM 1 UE 1e-02 due to a temporary restriction on capability of the USIM 1 UE 1e-02 associated with the some information caused by the USIM 2 UE 1e-03 (i.e., capability information on whether the UE is able to report, to base station 1 1e-04, information (or a parameter) required to be changed when capability of USIM 1 UE 1e-02 is restricted among information configured by base station 1 1e-04.). For example, the preference information may be referred to as configuration information supportable by the USIM 1 UE 1e-02 having restricted capability.
- Information on a capability of the USIM 1 UE 1e-02 to proactively notify base station 1 1e-04 of whether there is a temporary UE capability restriction via a predetermined RRC message (e.g., RRCSetupComplete, RRCResumeComplete, RRCReconfigurationComplete, or RRCReestablishmentComplete)
   * A capability of the USIM 1 UE 1e-02 to, when capability of the USIM 1 UE 1e-02 is temporarily restricted by the USIM 2 UE 1e-03, transmit a predetermined RRC message including an indicator indicating whether there is a temporary capability restriction on capability of the USIM 1 UE to base station 1 1e-04 according to a configuration of base station 1 1e-04

According to an embodiment, in operation 1e-20, base station 1 1e-04 may transmit a predetermined RRC message (e.g., an RRCReconfiguration message) including configuration information (musim-CapabilityRestrictionConfig) that allows the USIM 1 UE 1e-02 to report preferred/required temporary UE capability restriction information to base station 1 1e-04. For example, the configuration information (e.g., musim-CapabilityRestrictionConfig) may be contained in otherConfig. For example, the configuration information (e.g., musim-CapabilityRestrictionConfig) may include at least one of the following pieces of information. OtherConfig(musim-CapabilityRestrictionConfig)
- Measurement gap requirement restriction request/change configuration information
   * An indicator or a new prohibit timer value indicating whether the USIM 1 UE 1e-02 is allowed to transmit preferred measurement gap requirement restriction information to base station 1 1e-04 due to a MUSIM operation. For example, the preferred measurement gap requirement restriction information may include measurement gap information supportable by the USIM 1 UE 1e-02 even when capability of the USIM 1 UE 1e-02 is restricted. For example, the preferred measurement gap requirement restriction information may include information on a restricted measurement gap when capability of the USIM 1 UE is restricted.
- An indicator or a wait timer Txx value indicating whether the USIM 1 UE 1e-02 is allowed to transmit preference information indicating a release request for at least one of the following pieces of information configured by base station 1 1e-04 for the MUSIM 1 UE 1e-02 or indicating that the release request is no longer necessary (i.e., a cancellation of the release request) due to a MUSIM operation.
   * Preference information indicating a release request for a current serving cell and/or serving cell group, or preference information indicating that a release request therefor is no longer necessary.
   * Preference information on multi input multi output (MIMO) layers for the current serving cell and/or serving cell group, or preference information indicating that the preference information is no longer necessary.
      ** The preference information on MIMO layers is defined separately for the uplink and the downlink (or, the preference information on MIMO layers may be separately applied to the uplink and the downlink)
   * The Txx wait timer value may be configured as at least one value among predetermined integer values.
- MUSIM candidate frequency band list (e.g., musim-candidateBandList) configuration information required to be referenced by the USIM 1 UE 1e-01 when transmitting preference information on a MUSIM affected frequency band list (e.g., musim-AffectedBandCombList) and/or a MUSIM forbidden frequency band list (e.g., musimForbiddenBandCombList) to base station 1 1e-04 due to a MUSIM operation
   * The musim-CandidateBandList may include one or multiple pieces of FreqBandIndicatorNR information.
- A Txy prohibit timer value that may be applied when the USIM 1 UE 1e-01 transmits preference information on musim-AffectedBandCombList and/or musimForbiddenBandCombList to base station 1 1e-04 due to a MUSIM operation
   * The musim-AffectedBandCombList may be configured by one or multiple MUSIM-AffectedBandCombs, and each MUSIM-AffectedBandComb may include at least one of an integer value indicating particular FreqBandIndicatorNR information included in musim-CandidateBandList, a musim-MIMO-Layer-UL value, a musim-MIMO-Layer-DL value, and bandwidth restriction information.
   * The MUSIM-ForbiddenBandCombList may be configured by one or multiple MUSIM-ForbiddenBandCombs, and each MUSIM-ForbiddenBandComb may include integer values indicating one or more pieces of FreqBandIndicatorNR information included in musim-CandidateBandList.
- An indicator indicating whether the USIM 1 UE 1 1e-02 is able to proactively notify base station 1 1e-04 of whether there is a temporary UE capability restriction through a predetermined RRC message transmitted to base station 1 1e-04 after a transition to an RRC-connected mode or a predetermined RRC message transmitted in the RRC-connected mode

According to an embodiment, in operation 1e-25, base station 1 1e-04 may transmit a predetermined RRC message (e.g., RRCReconfiguration) including RRC configuration information to the USIM 1 UE 1e-02. The message (e.g., RRCReconfiguration) may include at least some of the following RRC configuration information. RRCReconfiguration (sCellToAddModList, mrdc-SecondaryCellGroup for DC)
- A list (sCellToAddModList) for adding or modifying a serving cell (SCell, or secondary cell) for a master node (MN)
   * For each SCell, at least one of the following pieces of configuration information may be included.
      ** sCellIndex: A short identifier for identifying an SCell
      ** servingCellConfigCommon: Configuration information including cell-specific parameters for a serving cell of a UE
      ** Physical cell ID (PCI) information
      ** Downlink configuration information and/or uplink configuration information commonly applied to each cell
         *** For example, the downlink configuration information commonly applied to each cell may include at least one of frequencyInfoDL, initialDownlinkBWP, or initialDownlink-RedCap.
         *** For example, the uplink configuration information commonly applied to each cell may refer to at least one of frequencyInfoUL and initialUplink BWP.
         ** servingCellConfig: Configuration information on a serving cell for each UE
         *** For example, the configuration information on a serving cell for each UE may refer to at least one of initial downlink BWP configuration information, downlinkBW-ToAddModList, firstActiveDownlinkBWP-Id, defaultDownlinkBWP-Id, uplinkConfig, and supplementaryUplink.
      ** smtc: SSB period/offset/duration configuration information on a target cell when an NR cell is added
      ** sCellState: An indicator indicating whether an sCell state is activated
      ** plmn-identityInfoList and/or npn-identityInfoList configuration information
- Information for adding/modifying a secondary node (SN)
   * For example, the information for adding/modifying a secondary node (SN) may refer to mrdc-SecondaryCellGroup configuration information. Specifically, the information for adding/modifying a secondary node (SN) may, in a case of NR-DC, refer to configuration information including RRCReconfiguration, and in a case of NE-DC, refer to configuration information including RRCConnectionReconfiguration.
      ** The information for adding/modifying a secondary node (SN) may include configuration information (e.g., CellGroup) for configuring a secondary cell group (SCG). The CellGroupConfig may include at least some of the following information.
         *** cellGroupId: An identifier for identifying a cell group
         *** spCellConfig: Configuration information on a primary secondary cell (PSCell)
         *** A list (sCellToAddModList) for adding or modifying a serving cell (SCell) for a secondary node (SN)

For reference, an ASN.1 structure for the predetermined RRC message (e.g., RRCReconfiguration) may be as shown in [Table 1].

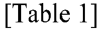

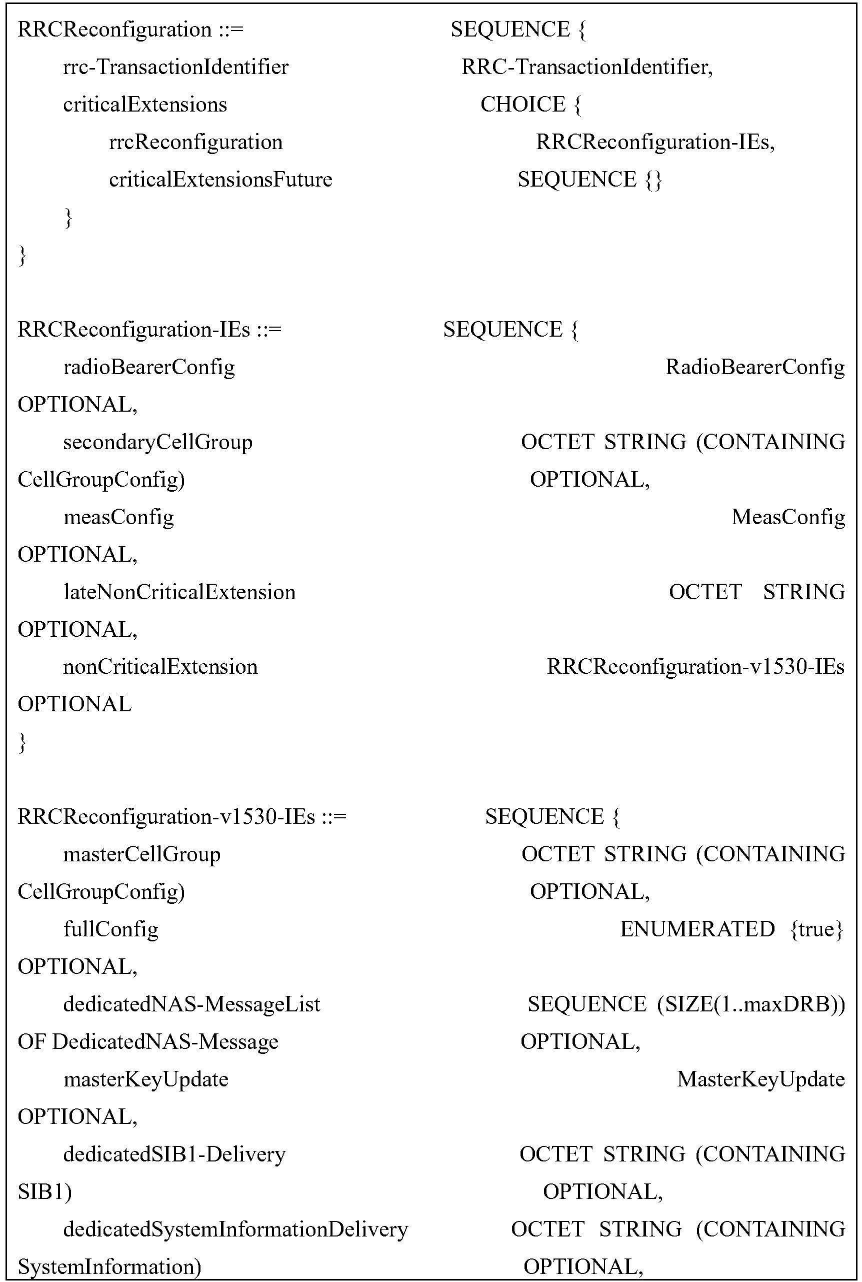

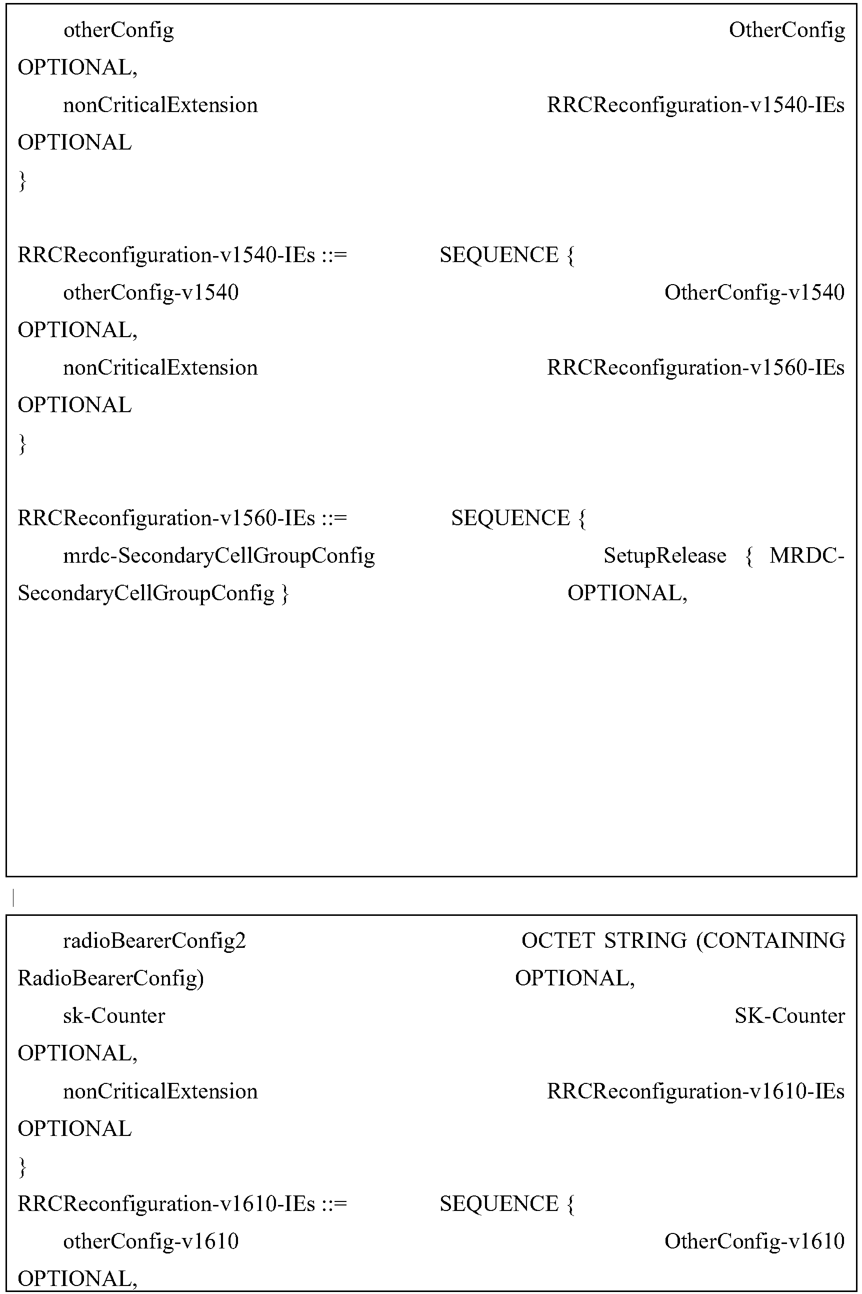

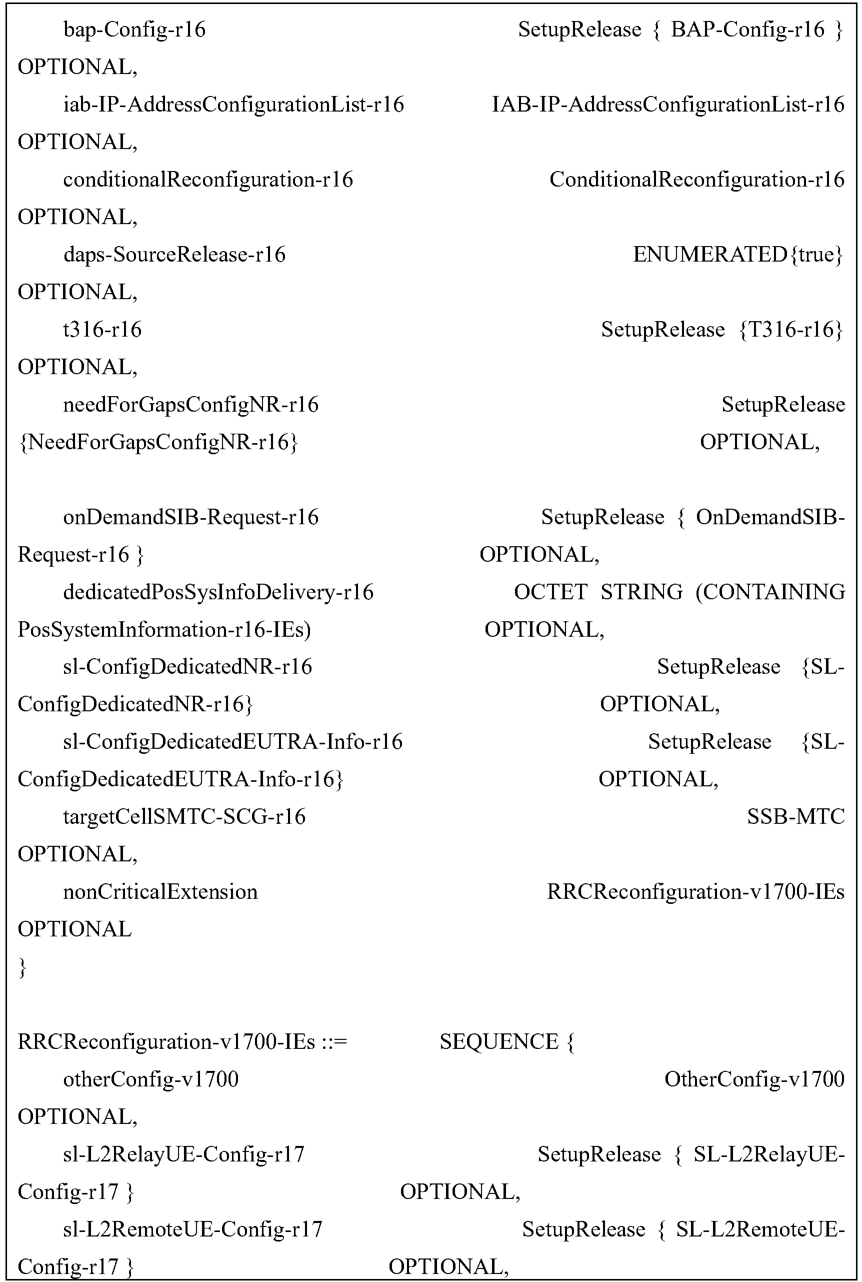

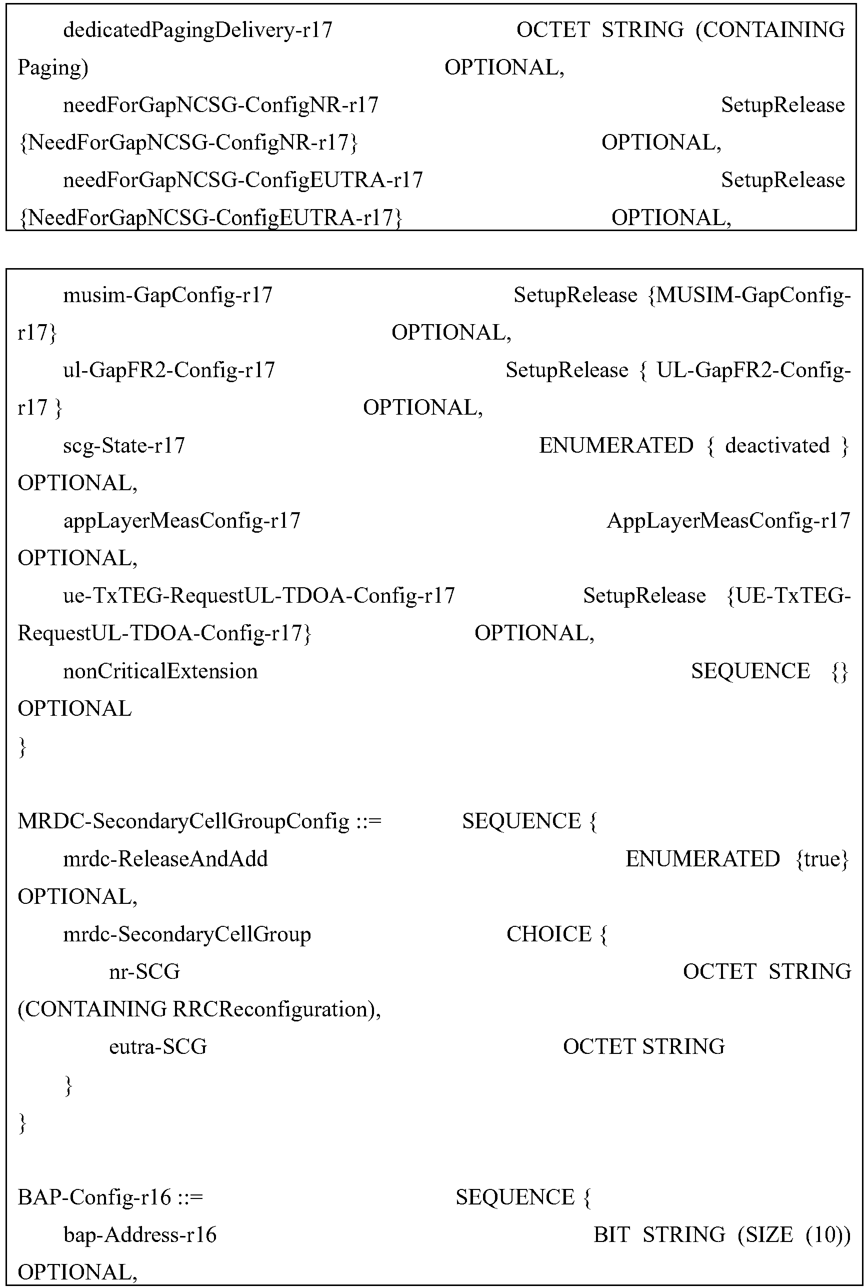

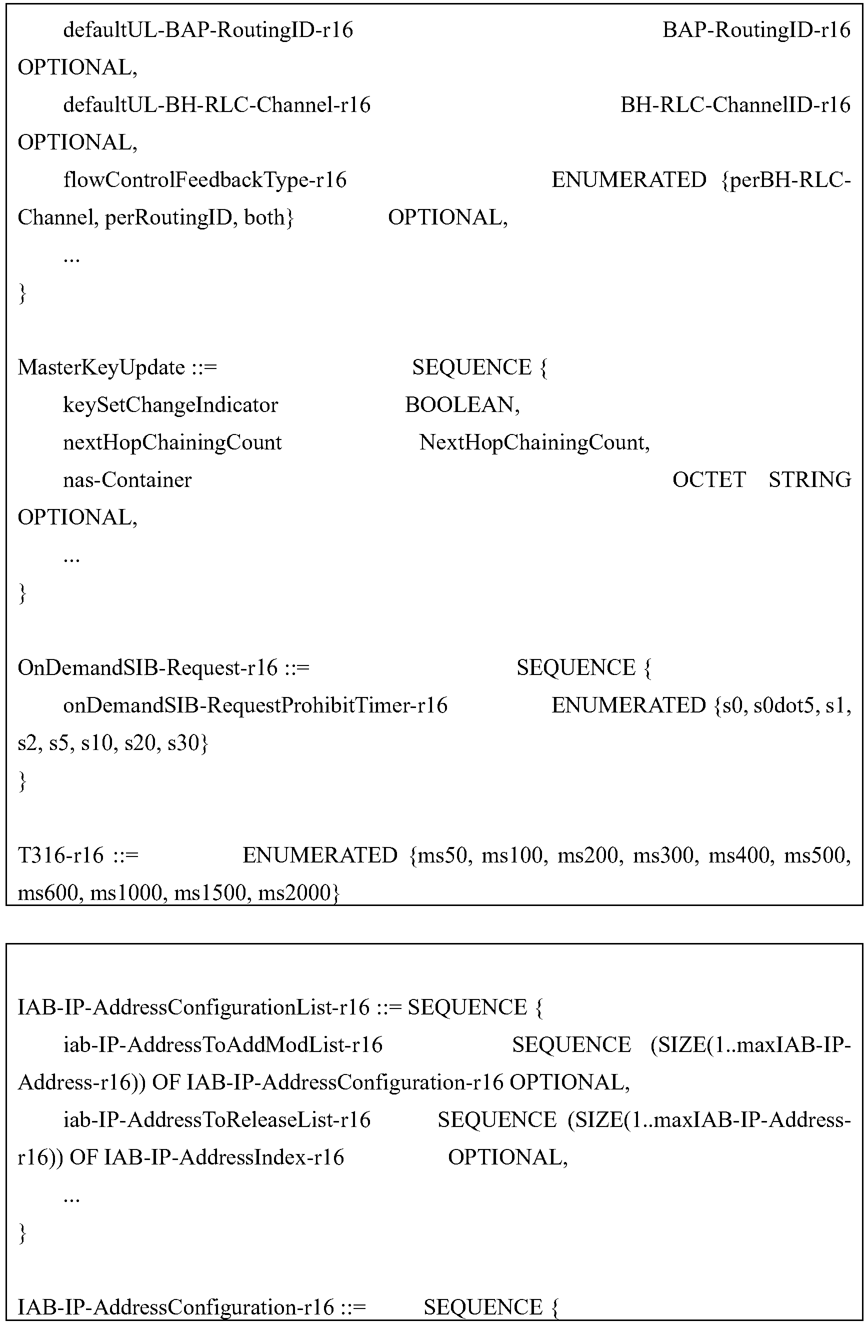

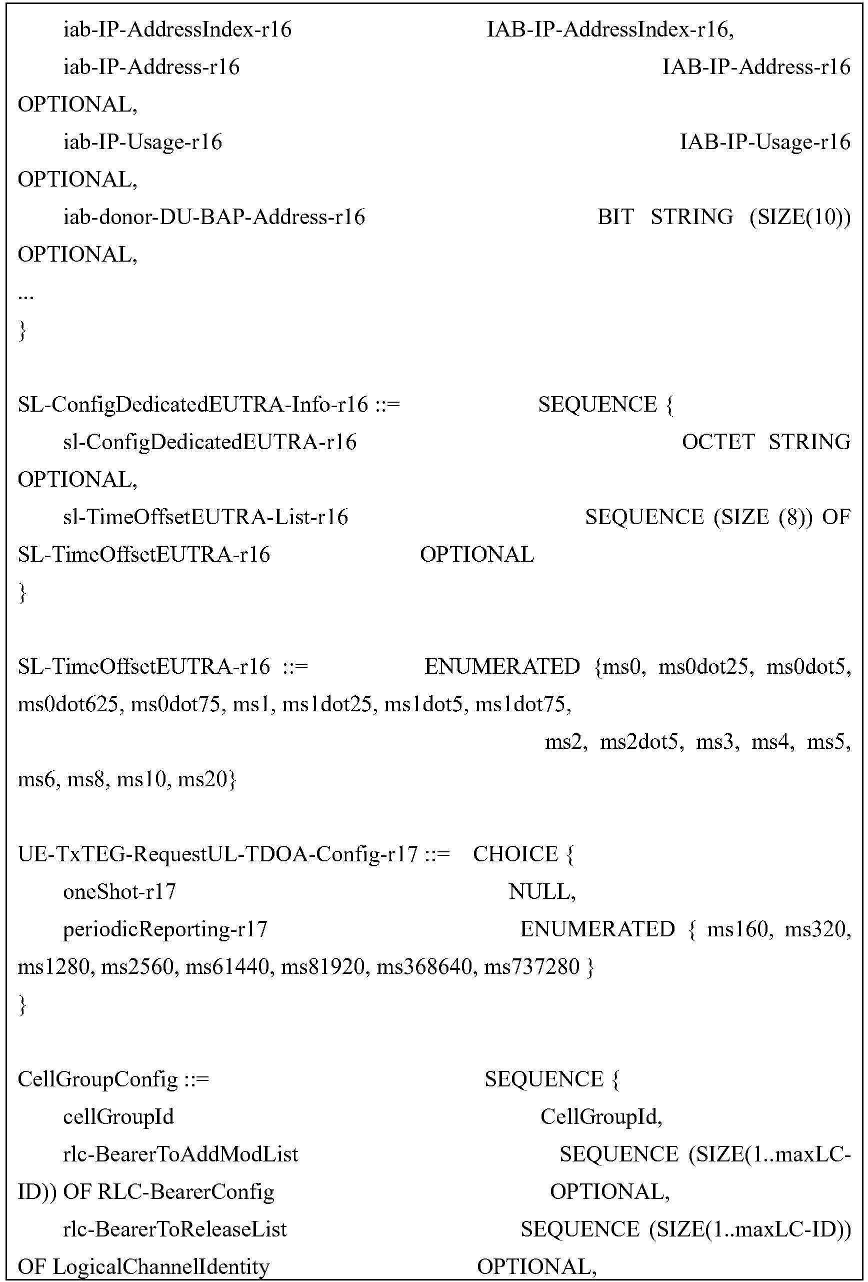

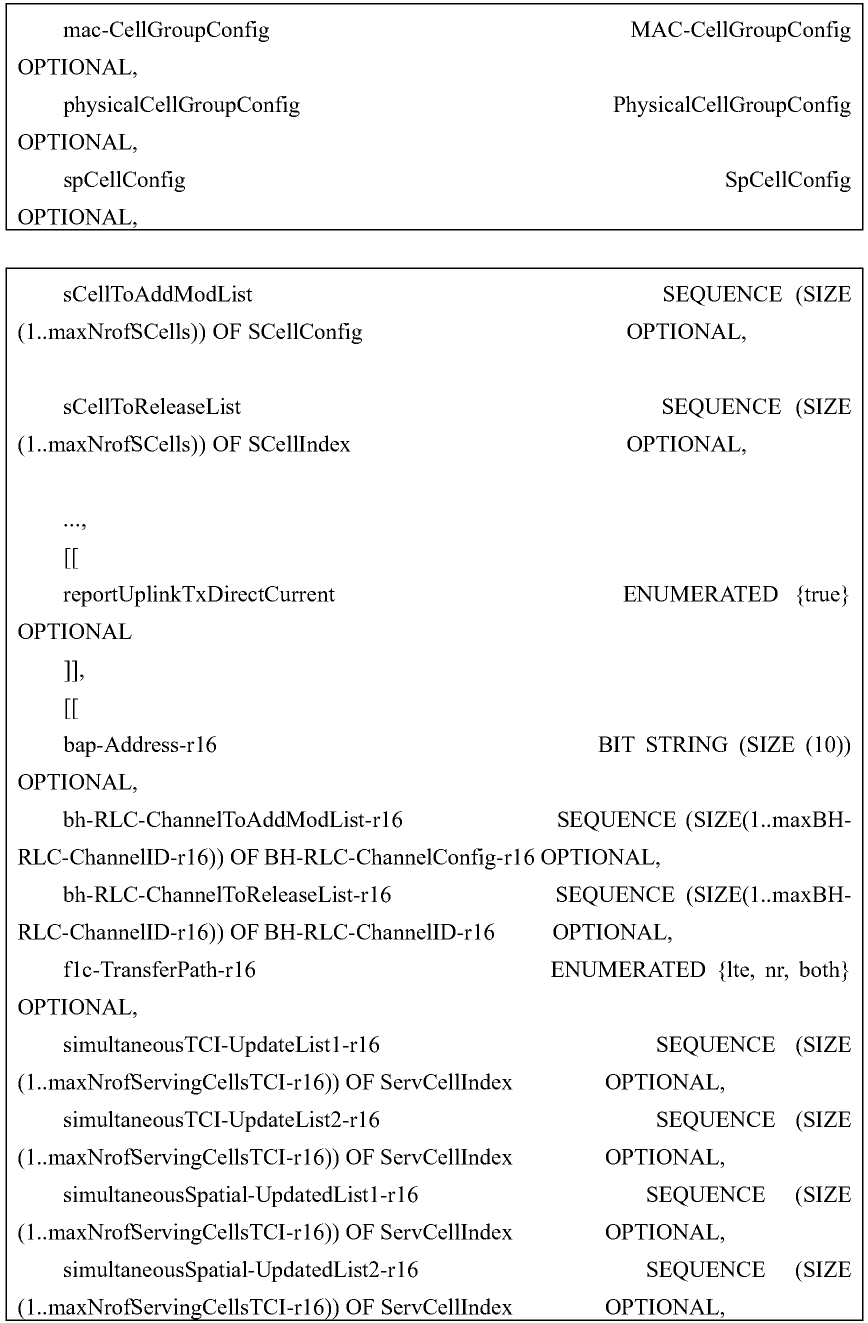

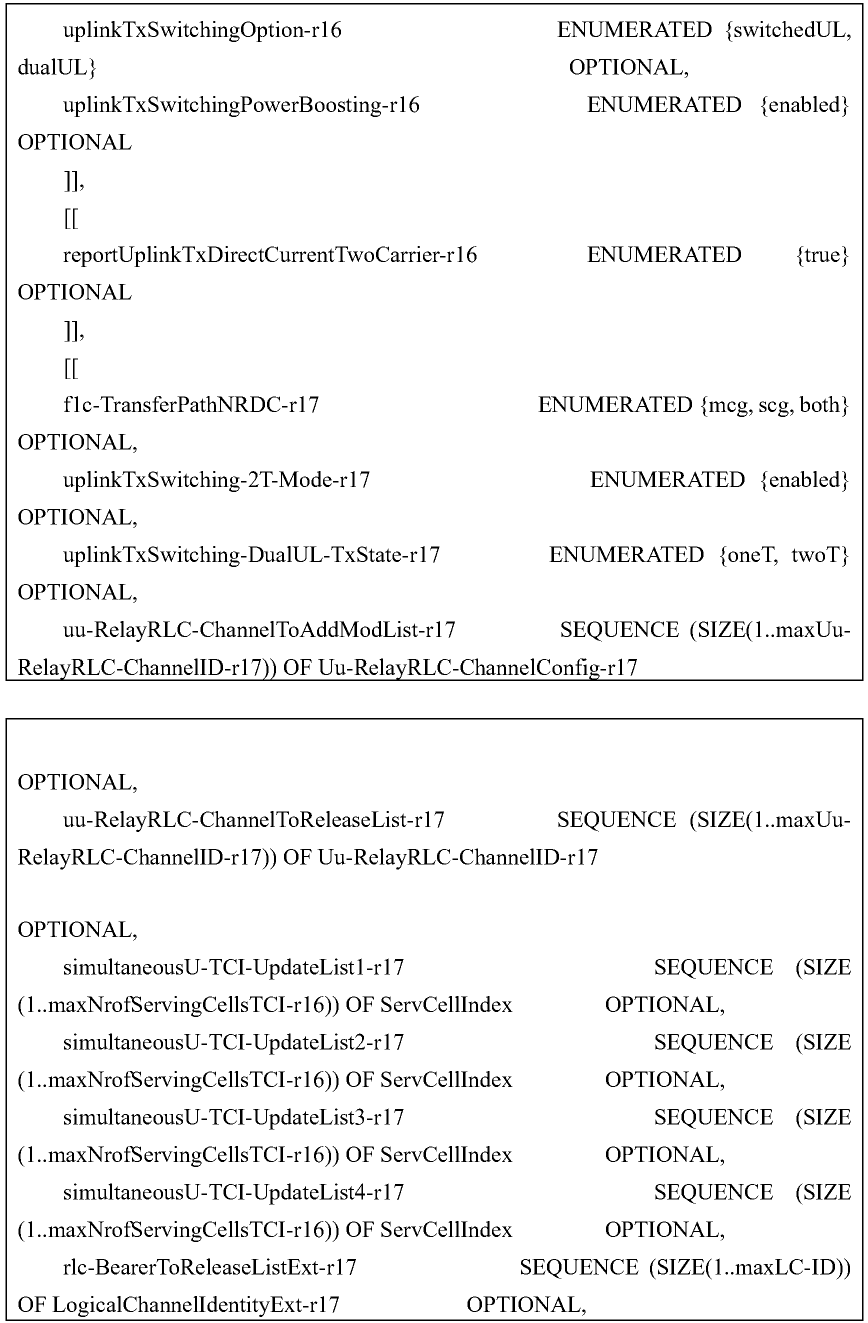

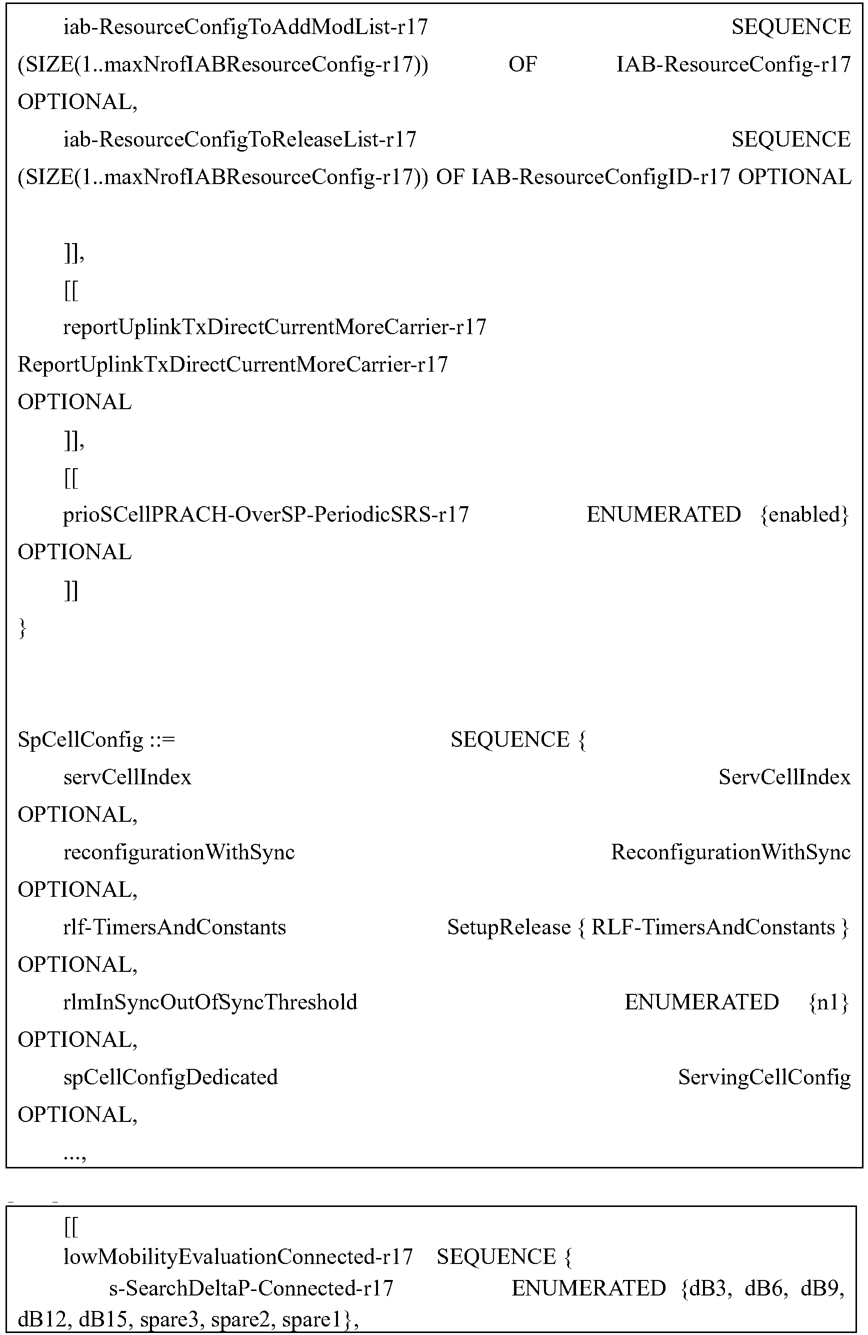

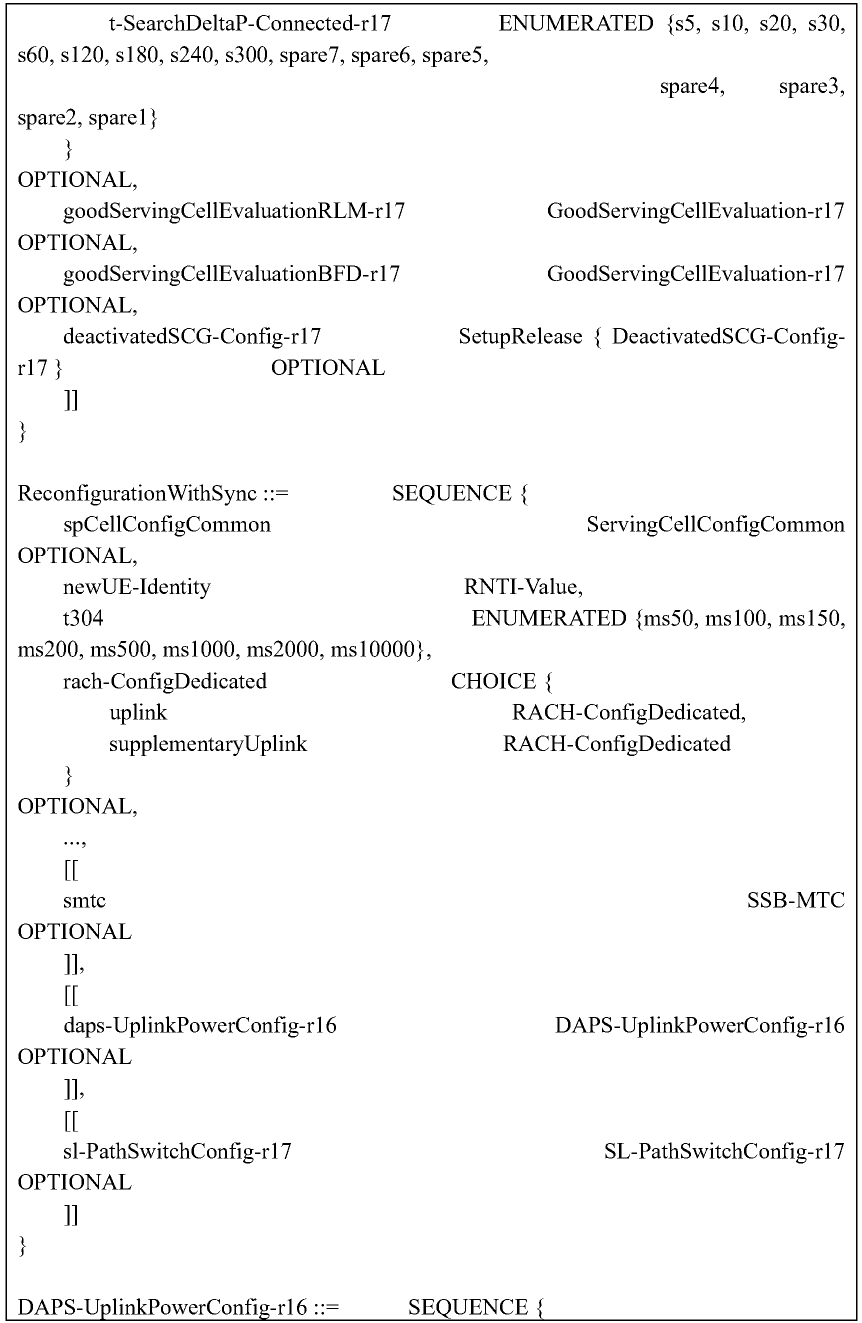

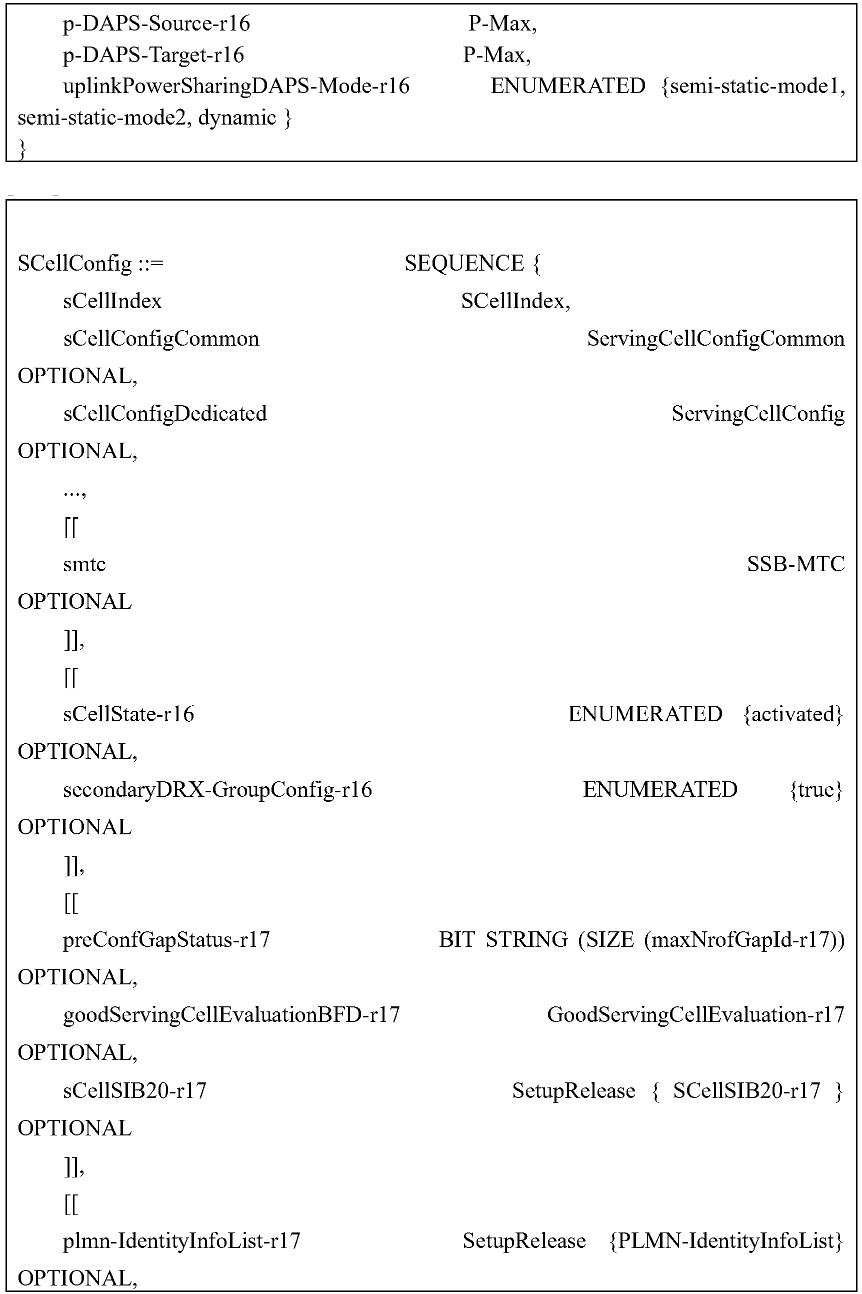

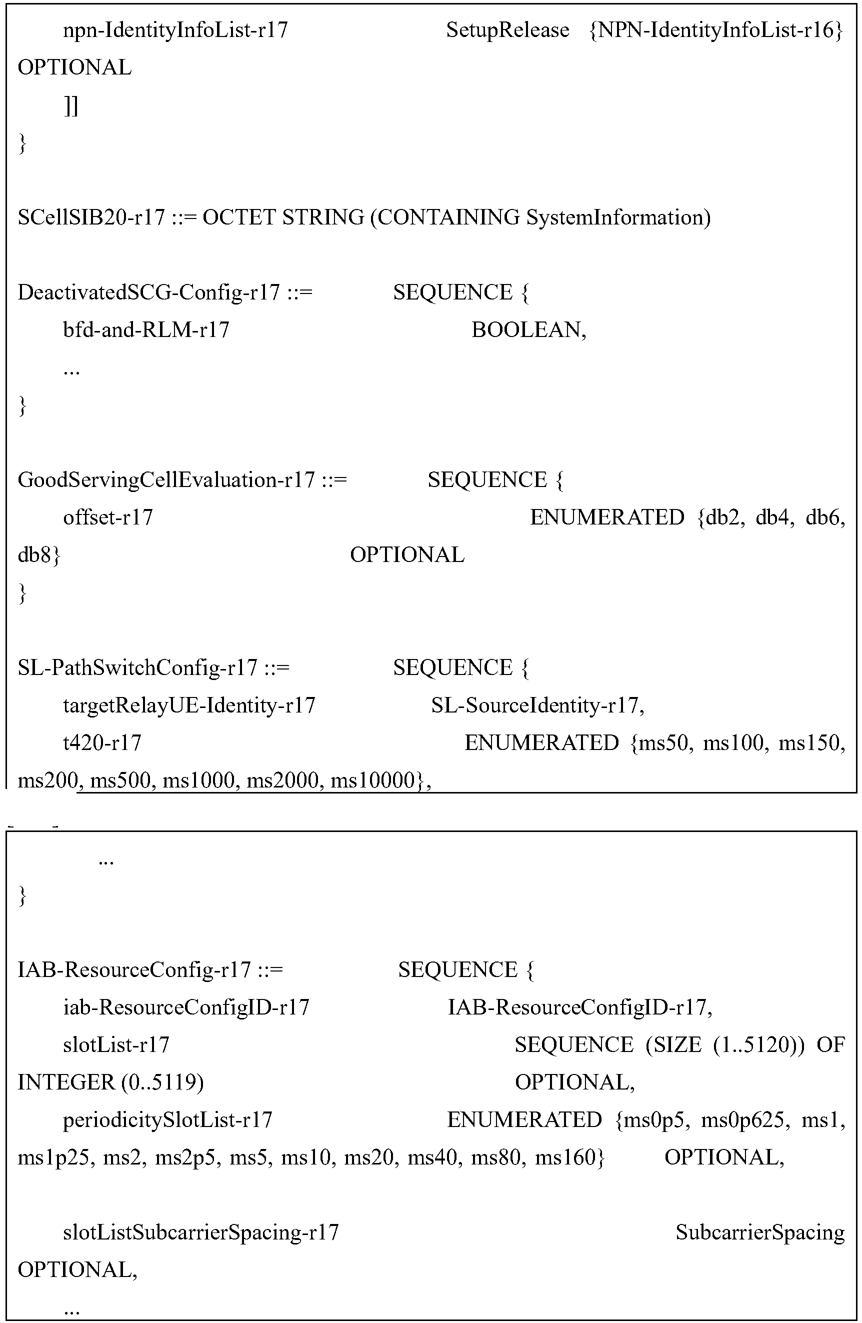

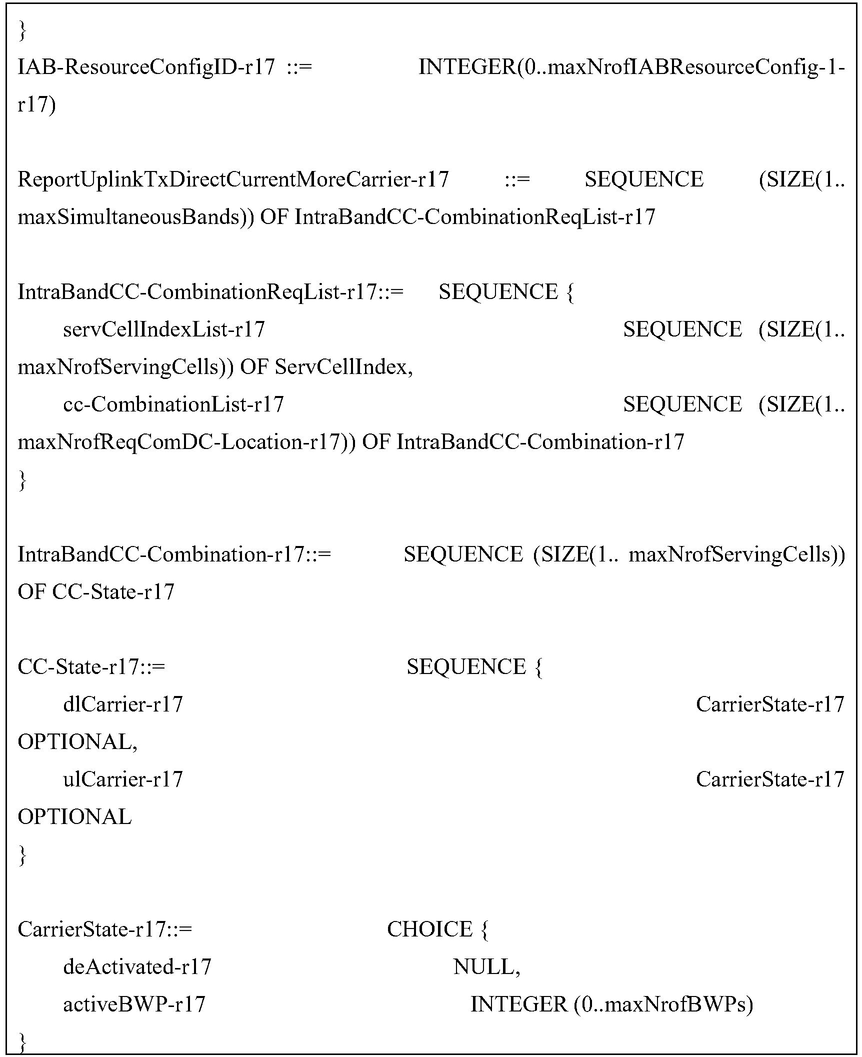

According to an embodiment, in operation 1e-30, the USIM 1 UE 1e-02 may transmit a predetermined RRC message (e.g., RRCReconfigurationComplete) to base station 1 1e-04 in response to the predetermined RRC message received in operation 1e-35. (UEAssistanceInformation(musim-CapabilityRestriction i.e. SCellIndex or indicator to release SCG)

According to an embodiment, in operation 1e-35, the USIM 1 UE 1e-02 configured to be able to provide information on a temporary capability restriction may transmit, to base station 1 1e-04, a predetermined RRC message (e.g., UEAssistanceInformation) including temporary capability restriction information (e.g., musim-CapabilityRestriction) caused by an operation of the USIM 2 UE 1e-03. For example, the USIM 1 UE 1e-01 may transmit the predetermined RRC message (e.g., UEAssistanceInformation) including the temporary UE capability restriction information (musim-CapabilityRestriction) to base station 1 1e-04 if at least one of the following conditions is satisfied.
- Condition 1: When the USIM 1 UE has a preference for a temporary UE capability restriction and has not transmitted a predetermined RRC message (e.g., UEAssistanceInformation) including temporary UE capability restriction information (musim-CapabilityRestriction) to base station 1 1e-04 since musim-CapabilityRestrictionConfig was configured by base station 1 1e-04 (if the UE has a preference on the temporary capability restriction and the UE did not transmit a UEAssistanceInformation message with musim-CapRestriction since it was configured to provide MUSIM assistance information for temporary capability restriction). The USIM 1 UE having a preference for a temporary UE capability restriction may imply that, when a temporary capability restriction practically occurs on the USIM 1 UE, there is a configuration supportable by the USIM 1 UE or configurable for the USIM 1 UE.
   * In this case, the UE may run or rerun a T3xx timer by using a T3xx value configured by the base station.
   * In this case, the UE may run or rerun a T3xy timer by using a T3xy value configured by the base station.
   * In this case, the UE may initiate a procedure of transmitting a UE assistance information message so as to provide the current MUSIM assistance information including temporary UE capability information. For example, the UE may perform the following procedure. If the UE has a preference for temporary capability restriction information (if UE has a preference for temporary capability restriction),
      ** If the UE has a preference to indicate a band(s) or a combination of bands having a UE capability restriction, and there is at least one combination of bands configured by at least one band that is indicated in musim-candidateBandList (if UE has a preference to indicate band(s) or combination of band(s) for which capabilities are restricted and if there is at least one combination of bands compromising of at least one band that is indicated in musim-candidateBandList)
         *** The UE may include musim-AffectedBandCombList preferred to be configured in the UE assistance information message (include the musim-AffectedBandCombList the UE prefers to be configured).
         *** The UE may include bandEntryIndex indicating each band in the UE assistance information message with respect to each combination of bands having a UE capability restriction (include the bandEntryIndex for each band for each combination of bands which capabilities are restricted).
         *** The UE may include, in musim-CapabilityRestricted, UE capability restriction information on bands indicated in musim-candidateBandList with respect to a combination of bands having a UE capability restriction (include the musim-capabilityRestricted for the bands that indicated in musim-candidateBandList with restricted capability together for the combination of bands which capabilities are restricted).
      ** If the UE has a preference to indicate a combination of bands to be avoided from being configured, and there is at least one combination of bands configured by at least one band that is indicated in musim-candidateBandList (if UE has a preference to indicate combination of bands to be avoided and if there is at least one combination of bands comprising of at least one band that is indicated in musim-candidateBandList)
         *** The UE may include musim-ForbiddenBandCombList preferred not to be configured in the UE assistance information message (include the musim-ForbiddenBandCombList the UE prefers not to be configured).
         *** The UE may include corresponding combinations of bands in musim-ForbiddenBandComb within the UE assistance information message (include the musim-ForbiddenBandComb for the corresponding combinations of bands).
         *** The UE may include bandEntryIndex indicating each band in the UE assistance information message with respect to each combination of bands to be avoided from being configured (include the bandEntryIndex for each band for each combination of bands to be avoided).
      ** If the UE prefers to release a serving cell(s) and/or SCG (if UE has a preference for serving cell(s) and/or SCG to release)
         *** musim-Cell-SCG-ToRelease may be included.
         *** The UE may include serving cell(s) that the UE prefers to release in musim-CellToRelease. In this case, information included in the musim-CellToRelease may be ScellIndex.
         *** The UE may have an SCG that the UE prefers to release, and set scg-ReleasePreference to scg-ReleasePreferred. In other words, the scg-ReleasePreferred is information indicating only whether or not release of an SCG is preferred, in an ENUMERATED format.
      ** If the UE has a preference to indicate pieces of affected capability information for serving cells (if UE has a preference to indicate the affected capabilities for the serving cells)
         *** The UE may include musim-CellToAffectList that the UE prefers not to be configured in the UE assistance information message (include the musim-CellToAffectList the UE prefers not to be configured)
         *** The UE may include, in the UE assistance information message, at least one of musim-ServCellIndex, musim-MIMO-Layer-DL, musim-MIMO-Layers-UL, or information on a bandwidth restriction (UL and/or DL), which indicates information on a capability restriction for a corresponding serving cell.
- Condition 2: When the current temporary UE capability restriction information (musim-CapabilityRestriction) is different from musim-CapabilityRestriction regarding an affected capability for serving cell(s), release of the serving cell(s), or release of an SCG, which is indicated in a UE assistance information message most recently transmitted to base station 1 1e-04, and a timer T3xx is not running (if the current musim-CapRestriction is different from the one indicated in the last transmission of the UEAssistanceInformation message including musim-CapRestriction for affected capability for serving cell(s) or serving cell(s) release or SCG release and timer T3xx is not running)
   * In this case, the UE may initiate a procedure of transmitting a UE assistance information message so as to provide the current musim-Cell-SCG-ToRelease and/or musim-CellToAffectList. For example, the UE may perform the following procedure. If the UE has a preference for temporary capability restriction information (if UE has a preference for temporary capability restriction),
      ** If the UE prefers to release a serving cell(s) and/or SCG (if UE has a preference for serving cell(s) and/or SCG to release)
         *** The UE may include musim-Cell-SCG-ToRelease in the UE assistance information message.
         *** The UE may include serving cell(s) that the UE prefers to release in musim-CellToRelease. In this case, included information is ScellIndex.
         *** The UE may have an SCG that the UE prefers to release, and set scg-ReleasePreference to scg-ReleasePreferred. In other words, the scg-ReleasePreference may be information indicating only whether or not release of an SCG is preferred, in an ENUMERATED format.
      ** If the UE has a preference to indicate pieces of affected capability information for serving cells (if UE has a preference to indicate the affected capabilities for the serving cells)
         *** The UE may include musim-CellToAffectList that the UE prefers not to be configured in the UE assistance information message (include the musim-CellToAffectList the UE prefers not to be configured).
         *** The UE may include, in the UE assistance information message, at least one of musim-ServCellIndex, musim-MIMO-Layer-DL, musim-MIMO-Layers-UL, or information on a bandwidth restriction (UL and/or DL), which indicates information on a capability restriction for a corresponding serving cell.
   * In this case, the UE may run or rerun a T3xx timer by using a T3xx value configured by the base station.
- Condition 3: When the current temporary UE capability restriction information is different from musim-CapabilityRestriction regarding a restriction band combination, which is indicated in a UE assistance information message most recently transmitted to base station 1 1e-04, and a timer T3xy is not running (if the current musim-CapRestriction is different from the one indicated in the last transmission of the UEAssistanceInformation message including musim-CapRestriction for constraint band combination(s) and timer T3xy is not running)
   * In this case, the UE may initiate a procedure of transmitting a UE assistance information message so as to provide the current musim-AffectedBandCombList and/or musim-ForbiddenBandCombList. For example, the UE may perform the following procedure. If the UE has a preference for temporary capability restriction information (if UE has a preference for temporary capability restriction),
      ** If the UE has a preference to indicate a band(s) or a combination of bands having a UE capability restriction, and there is at least one combination of bands configured by at least one band that is indicated in musim-candidateBandList (if UE has a preference to indicate band(s) or combination of band(s) for which capabilities are restricted and if there is at least one combination of bands compromising of at least one band that is indicated in musim-candidateBandList)
         *** The UE may include musim-AffectedBandCombList that the UE prefers to be configured in the UE assistance information message (include the musim-AffectedBandCombList the UE prefers to be configured).
         *** The UE may include bandEntryIndex indicating each band in the UE assistance information message with respect to each combination of bands having a UE capability restriction (include the bandEntryIndex for each band for each combination of bands which capabilities are restricted).
         *** The UE may include, in musim-CapabilityRestricted, UE capability restriction information on bands indicated in musim-candidateBandList with respect to a combination of bands having a UE capability restriction (include the musim-capabilityRestricted for the bands that indicated in musim-candidateBandList with restricted capability together for the combination of bands which capabilities are restricted).
      ** If the UE has a preference to indicate a combination of bands to be avoided from being configured, and there is at least one combination of bands configured by at least one band that is indicated in musim-candidateBandList (if UE has a preference to indicate combination of bands to be avoided and if there is at least one combination of bands comprising of at least one band that is indicated in musim-candidateBandList)
         *** The UE may include musim-ForbiddenBandCombList preferred not to be configured in the UE assistance information message (include the musim-ForbiddenBandCombList the UE prefers not to be configured).
         *** The UE may include corresponding combinations of bands in musim-ForbiddenBandComb (include the musim-ForbiddenBandComb for the corresponding combinations of bands).
         *** The UE may include bandEntryIndex indicating each band in the UE assistance information message with respect to each combination of bands to be avoided from being configured (include the bandEntryIndex for each band for each combination of bands to be avoided).
   * In this case, the UE may run or rerun a T3xy timer by using a T3xy value configured by the base station.

For reference, if the USIM 1 UE 1e-02 no longer has a preference for a temporary UE capability restriction (if the UE has no longer preference for temporary capability restriction), the UE may not include the preference for the temporary UE capability restriction in musim-CapabilityRestriction in a musim-Assistance IE and transmit the musim-Assistance IE to base station 1 1e-04. That is, when the USIM 1 UE 1e-02 previously has included information A in the musim-Assistance IE but a preference for A is no longer required, the USIM 1 UE may not include the information A in the musim-Assistance IE.

According to an embodiment, in operation 1e-40, base station 1 1e-04 may transmit a predetermined RRC message (e.g., RRCReconfiguration) including RRC configuration information in response to operation 1e-35, based on the temporary UE capability restriction information provided by the USIM 1 UE 1e-02. For example, when the temporary UE capability restriction provided in operation 1e-35 is resolved through the received RRC message, the USIM 1 UE 1e-02 may stop the running T3xx timer in operation 1e-41 (stop timer T3xx).

According to an embodiment, in operation 1e-45, the USIM 1 UE 1e-02 may transmit a predetermined RRC message (e.g., RRCReconfigurationComplete) to base station 1 1e-04 in response to the predetermined RRC message received in operation 1e-40.

In the disclosure, when the USIM 1 UE 1e-02 transmits a preference request for SCell release to base station 1 1e-04 via a UE assistance information message, the UE may transmit SCellIndex to indicate the request for SCell release. In this case, since the UE and the base station only remember the most recently transmitted UE assistance information message, it is not possible to identify a detailed RRC configuration by which an SCell indicated by the SCellIndex is configured or a frequency at which the SCell is operated. This may because SCellIndex information merely represents a particular integer value among 1 to 31. Furthermore, a limitation exists where the base station is unable to add a different cell to the UE by using the same SCellIndex as SCellIndex previously indicated by the UE to the base station via a UE assistance information message, unless the UE transmits a UE assistance information message without including the previously indicated SCellIndex again. In a case where the UE indicates multiple SCellIndexs via a UE assistance information message to transmit a preference request for release of multiple SCells, a limitation may occur where the base station is unable to additionally add an SCell to the UE.

In the disclosure, when the USIM 1 UE 1e-02 transmits a preference request for SCG release to the base station 1e-04 via a UE assistance information message, the UE may transmit only an indicator indicating the preference request for SCG release to indicate the preference request for SCG release. Since the UE and the base station only remember the most recently transmitted UE assistance information message, it is not possible to identify a detailed RRC configuration by which a PSCell belonging to an SCG indicated by the SCG release indicator is configured or a frequency at which the PSCell is operated.

FIG. 1F is a signal flow diagram in which a UE (multi-USIM UE, hereinafter referred to as a MUSIM UE) supporting multiple universal subscriber identity modules (USIMs) requests and/or provides temporary UE capability restrictions from and/or to a base station according to a configuration of the base station according to an embodiment.

Referring to FIG. 1F, a MUSIM UE 1f-01 according to an embodiment may be referred to as a UE supporting multiple USIMs in a single device. In the disclosure, for the sake of description, a dual-USIM UE supporting two USIMs is described.

For example, the MUSIM UE 1f-01 may be referred to as a USIM 1 UE 1f-02 when operating in USIM 1, and may be referred to as a USIM 2 UE 1f-03 when operating in USIM 2. In this case, base stations 1f-04 and 1f-05 associated with the USIMs, respectively, may recognize or identify the USIM 1 UE 1f-02 and the USIM 2 UE 1f-03 as separate UEs, rather than the MUSIM UE 1f-01 which is operated in the same device.

According to an embodiment, the USIM 1 UE 1f-02 and the USIM 2 UE 1f-03 may share and use hardware capability (or hardware (e.g., CP, AP, or transceiver)) of the MUSIM UE 1f-01. Therefore, when the USIM 1 UE 1f-02 and the USIM 2 UE 1f-03 simultaneously transmit and/or receive signals with base station 1 1f-04 and base station 2 1f-05, capability of each USIM UE may be temporarily restricted by each other.

According to an embodiment, in operation 1f-10, the USIM 1 UE 1f-02 may establish an RRC connection with base station 1 1f-04 and be in an RRC-connected mode (RRC_CONNECTED).

According to an embodiment, in operation 1f-11, the USIM 2 UE 1f-03 may establish an RRC connection with base station 2 1f-05 and be in an RRC-connected mode (RRC_CONNECTED).

According to an embodiment, in operation 1f-15, the USIM 1 UE 1f-02 may transmit, to base station 1 1f-04, a UE capability information message (e.g., UECapabilityInformation) containing or including capability information of the MUSIM UE 1f-01. This may follow the above embodiment. For example, the UE capability information message (e.g., UECapabilityInformation) may include information described with reference to FIG. 1E (e.g., information on a capability to request or provide detailed temporary UE capability restrictions, or information on a capability to proactively notify of whether there is a temporary UE capability restriction).

According to an embodiment, in operation 1f-20, base station 1 1f-04 may transmit a predetermined RRC message (e.g., an RRCReconfiguration message) including configuration information (e.g., musim-CapabilityRestrictionConfig) that allows the USIM 1 UE 1f-02 to report preferred/required temporary UE capability restriction information to base station 1 1f-04. For example, the musim-CapabilityRestrictionConfig may be contained or included in otherConfig. This may follow the above embodiment. For example, the musim-CapabilityRestrictionConfig may include information described with reference to FIG. 1E (e.g., measurement gap requirement restriction request/change configuration information, an indicator or a wait timer Txx value indicating whether transmission of preference information is allowed, a Txy prohibit timer value that may be applied when preference information on musim-AffectedBandCombList and/or musimForbiddenBandCombList is transmitted, or an indicator indicating presence or absence of a capability to proactively notify of whether there is a temporary UE capability restriction). OtherConfig(musim-CapabilityRestrictionConfig)

According to an embodiment, in operation 1f-25, base station 1 1f-04 may transmit a predetermined RRC message (e.g., RRCReconfiguration) including RRC configuration information to the USIM 1 UE 1f-02. The message (e.g., RRCReconfiguration) may include at least one of the following pieces of RRC configuration information. This may follow the above embodiment. For example, the message (e.g., RRCReconfiguration) may include information described with reference to FIG. 1E (e.g., a list (sCellToAddModList) for adding or modifying a serving cell (SCell) for a master node (MN), sCellIndex, servingCellConfigCommon, physical cell ID (PCI) information, downlink configuration information and/or uplink configuration information commonly applied to each cell, servingCellConfig, smtc, sCellState, plmn-identityInfoList and/or npn-identityInfoList configuration information, information for adding/modifying a secondary node (SN), cellGroupId, spCellConfig, or a list (sCellToAddModList) for adding or modifying a serving cell (SCell) for a secondary node (SN)). RRCReconfiguration (sCellToAddModList, mrdc-SecondaryCellGroup for DC)

According to an embodiment, in operation 1f-30, the USIM 1 UE 1f-02 may transmit a predetermined RRC message (e.g., RRCReconfigurationComplete) to base station 1 1f-04 in response to the predetermined RRC message received in operation 1f-35. (UEAssistanceInformation(musim-CapabilityRestriction i.e. detailed SCell/PSCell information)

According to an embodiment, in operation 1f-35, the USIM 1 UE 1f-02 configured to be able to provide information on a temporary capability restriction may transmit, to base station 1 1f-04, a predetermined RRC message (e.g., UEAssistanceInformation) including temporary capability restriction information (e.g., musim-CapabilityRestriction) caused by an operation of the USIM 2 UE 1f-03. For example, the USIM 1 UE 1f-01 may transmit the predetermined RRC message (e.g., UEAssistanceInformation) including the temporary UE capability restriction information (musim-CapabilityRestriction) to base station 1 1f-04 if at least one of the following conditions is satisfied.
- Condition 1: When the USIM 1 UE has a preference for a temporary UE capability restriction and has not transmitted the predetermined RRC message (e.g., UEAssistanceInformation) including temporary UE capability restriction information (musim-CapabilityRestriction) to base station 1 1f-04 since musim-CapabilityRestrictionConfig was configured by base station 1 1f-04 (if the UE has a preference on the temporary capability restriction and the UE did not transmit a UEAssistanceInformation message with musim-CapRestriction since it was configured to provide MUSIM assistance information for temporary capability restriction)
* In this case, the UE may run or rerun a T3xx timer by using a T3xx value configured by the base station.
* In this case, the UE may run or rerun a T3xy timer by using a T3xy value configured by the base station.
* In this case, the UE may initiate a procedure of transmitting a UE assistance information message so as to provide the current MUSIM assistance information including temporary UE capability information. For example, the UE may perform the following procedure. If the UE has a preference for temporary capability restriction information (if UE has a preference for temporary capability restriction),
** If the UE has a preference to indicate a band(s) or a combination of bands having a UE capability restriction, and there is at least one combination of bands configured by at least one band that is indicated in musim-candidateBandList (if UE has a preference to indicate band(s) or combination of band(s) for which capabilities are restricted and if there is at least one combination of bands compromising of at least one band that is indicated in musim-candidateBandList)
*** The UE may include musim-AffectedBandCombList that the UE prefers to be configured in the UE assistance information message (include the musim-AffectedBandCombList the UE prefers to be configured).
*** The UE may include bandEntryIndex indicating each band in the UE assistance information message with respect to each combination of bands having a UE capability restriction (include the bandEntryIndex for each band for each combination of bands which capabilities are restricted).
*** The UE may include, in musim-CapabilityRestricted, UE capability restriction information on bands indicated in musim-candidateBandList with respect to a combination of bands having a UE capability restriction (include the musim-capabilityRestricted for the bands that indicated in musim-candidateBandList with restricted capability together for the combination of bands which capabilities are restricted).

** If the UE has a preference to indicate a combination of bands to be avoided from being configured, and there is at least one combination of bands configured by at least one band that is indicated in musim-candidateBandList (if UE has a preference to indicate combination of bands to be avoided and if there is at least one combination of bands comprising of at least one band that is indicated in musim-candidateBandList).
*** The UE may include musim-ForbiddenBandCombList preferred not to be configured in the UE assistance information message (include the musim-ForbiddenBandCombList the UE prefers not to be configured).
*** The UE may include corresponding combinations of bands in musim-ForbiddenBandComb (include the musim-ForbiddenBandComb for the corresponding combinations of bands).
*** The UE may include bandEntryIndex indicating each band in the UE assistance information message with respect to each combination of bands to be avoided from being configured (include the bandEntryIndex for each band for each combination of bands to be avoided).

** If the UE prefers to release a serving cell(s) and/or SCG (if UE has a preference for serving cell(s) and/or SCG to release)
*** The UE may include musim-Cell-SCG-ToRelease in the UE assistance information message.
*** The UE may include serving cell(s) that the UE prefers to release in musim-CellToRelease. Unlike the above-described embodiment, the UE according to the disclosure may, instead of including SCellIndex, include information on serving cell(s) preferred to be released in musim-CellToRelease, through at least one of the following methods, in order to inform the base station of which specific SCell is to be released.
**** Option 1: If the UE has global cell identity information of an SCell to be released, the UE may include the global cell identity information in musim-CellToRelease. For example, a global cell identity is an identifier for uniquely identifying an NR cell and may be configured as a combination of a public land mobile network (PLMN)-identity, cellIdentity, and/or TrackingAreaCode. For example, the global cell identity may have an ASN.1 structure as shown in [Table 2]. If the global cell identity is not available, the UE may include physical cell identity and carrier frequency information of the SCell in musim-CellToRelease. Of course, the carrier frequency information may refer to one of pieces of frequency-related configuration information included in configuration information on the SCell (servingCellConfigCommon and/or servingCellConfig).

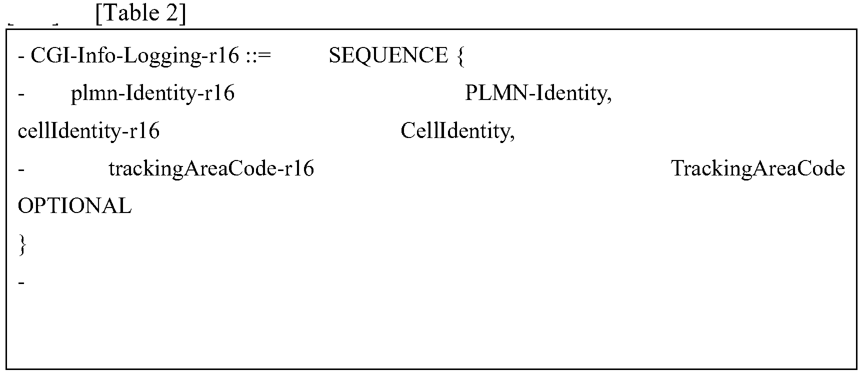

| ***CGI-Info-Logging field* descriptions** |
|---|
| ***cellIdentity*** |
| Unambiguously identify a cell within the context of the PLMN. It belongs the first *PLMN-IdentityInfo* IE of *PLMN-IdentityInfoList* in *SIB1.* |
| ***plmn-Identity*** |
| Identifies the PLMN of the cell for the reported *cellIdentity*: the first PLMN entry of *plmn-IdentityList* (in SIB1) in the instance of *PLMN-IdentityInfoList* that contained the reported *cellIdentity*. |
| ***trackingAreaCode*** |
| Indicates Tracking Area Code to which the cell indicated by cellIdentity field belongs. |

**** Option 2: FreqBandIndicatorNR information of an SCell to be released may be included. In this case, the information may not be included in musim-CandidateBandList.
**** Option 3: The UE may allow the base station to configure only the SCells included in musim-CandidateBandList. To this end, the UE includes FreqBandIndicatorNR information of an SCell to be released in the UE assistance information message.
*** Unlike the aforementioned embodiments, if there is a SCG that the UE prefers to release, the UE of the disclosure does not include an indicator indicating only whether or not release of the SCG is preferred. Instead, to inform the base station of which specific cell corresponds to a PSCell of the SCG to be released, the UE indicates musim-CellToRelease through at least one of the following methods.
*** If there is global cell identity information of the PSCell, the UE may include the global cell identity information in the UE assistance information message. Otherwise, the UE may include physical cell identity and carrier frequency information of the PSCell in the UE assistance information message. Of course, the carrier frequency information may refer to one of pieces of frequency-related configuration information included in configuration information on the PSCell (e.g., spCellConfig).
** If the UE has a preference to indicate pieces of affected capability information for serving cells (if UE has a preference to indicate the affected capabilities for the serving cells)
*** The UE may include musim-CellToAffectList that the UE prefers not to be configured in the UE assistance information message (include the musim-CellToAffectList the UE prefers not to be configured)
*** The UE may include, in the UE assistance information message, at least one of musim-ServCellIndex (an identifier or information element indicating one of the methods proposed in the disclosure), musim-MIMO-Layer-DL, musim-MIMO-Layers-UL, or information on a bandwidth restriction (UL and/or DL), which indicates information on a capability restriction for a corresponding serving cell.

- Condition 2: When the current temporary UE capability restriction information (musim-CapabilityRestriction) is different from musim-CapabilityRestriction regarding an affected capability for serving cell(s), release of the serving cell(s), or release of an SCG, which is indicated in a UE assistance information message most recently transmitted to base station 1 1f-04, and a timer T3xx is not running (if the current musim-CapRestriction is different from the one indicated in the last transmission of the UEAssistanceInformation message including musim-CapRestriction for affected capability for serving cell(s) or serving cell(s) release or SCG release and timer T3xx is not running)
* In this case, the UE may initiate a procedure of transmitting a UE assistance information message so as to provide the current musim-Cell-SCG-ToRelease and/or musim-CellToAffectList. For example, the UE may perform the following procedure. If the UE has a preference for temporary capability restriction information (if UE has a preference for temporary capability restriction),
   ** If the UE prefers to release a serving cell(s) and/or SCG (if UE has a preference for serving cell(s) and/or SCG to release)
      *** The UE may include musim-Cell-SCG-ToRelease in the UE assistance information message.
      *** The UE may include serving cell(s) that the UE prefers to release in musim-CellToRelease. In this case, the included information may be the same as the content described above.
      *** If there is an SCG that the UE prefers to release, the UE may include information for indicating the SCG preferred to be released in musim-Cell-SCG-ToRelease. In this case, the included information may be the same as the content described above.
   ** If the UE has a preference to indicate pieces of affected capability information for serving cells (if UE has a preference to indicate the affected capabilities for the serving cells)
      *** The UE may include musim-CellToAffectList that the UE prefers not to be configured in the UE assistance information message (include the musim-CellToAffectList the UE prefers not to be configured).
      *** The UE may include, in the UE assistance information message, at least one of musim-ServCellIndex (an identifier or information element indicating one of the methods proposed in the disclosure), musim-MIMO-Layer-DL, musim-MIMO-Layers-UL, or information on a bandwidth restriction (UL and/or DL), which indicates information on a capability restriction for a corresponding serving cell.
* In this case, the UE may run or rerun a T3xx timer by using a T3xx value configured by the base station.

- Condition 3: When the current temporary UE capability restriction information is different from musim-CapabilityRestriction regarding a restriction band combination, which is indicated in a UE assistance information message most recently transmitted to base station 1 1f-04, and a timer T3xy is not running (if the current musim-CapRestriction is different from the one indicated in the last transmission of the UEAssistanceInformation message including musim-CapRestriction for constraint band combination(s) and timer T3xy is not running)
* In this case, the UE may initiate a procedure of transmitting a UE assistance information message so as to provide the current musim-AffectedBandCombList and/or musim-ForbiddenBandCombList. For example, the UE may perform the following procedure. If the UE has a preference for temporary capability restriction information (if UE has a preference for temporary capability restriction),
   ** If the UE has a preference to indicate a band(s) or a combination of bands having a UE capability restriction, and there is at least one combination of bands configured by at least one band that is indicated in musim-candidateBandList (if UE has a preference to indicate band(s) or combination of band(s) for which capabilities are restricted and if there is at least one combination of bands compromising of at least one band that is indicated in musim-candidateBandList)
      *** The UE may include musim-AffectedBandCombList that the UE prefers to be configured in the UE assistance information message (include the musim-AffectedBandCombList the UE prefers to be configured).
      *** The UE may include bandEntryIndex indicating each band in the UE assistance information message with respect to each combination of bands having a UE capability restriction (include the bandEntryIndex for each band for each combination of bands which capabilities are restricted).
      *** The UE may include, in musim-CapabilityRestricted, UE capability restriction information on bands indicated in musim-candidateBandList with respect to a combination of bands having a UE capability restriction (include the musim-capabilityRestricted for the bands that indicated in musim-candidateBandList with restricted capability together for the combination of bands which capabilities are restricted).
   ** If the UE has a preference to indicate a combination of bands to be avoided from being configured, and there is at least one combination of bands configured by at least one band that is indicated in musim-candidateBandList (if UE has a preference to indicate combination of bands to be avoided and if there is at least one combination of bands comprising of at least one band that is indicated in musim-candidateBandList).
      *** The UE may include musim-ForbiddenBandCombList preferred not to be configured in the UE assistance information message (include the musim-ForbiddenBandCombList the UE prefers not to be configured).
      *** The UE may include combinations of bands in musim-ForbiddenBandComb (include the musim-ForbiddenBandComb for the corresponding combinations of bands).
      *** The UE may include bandEntryIndex indicating each band in the UE assistance information message with respect to each combination of bands to be avoided from being configured (include the bandEntryIndex for each band for each combination of bands to be avoided).
* In this case, the UE may run or rerun a T3xy timer by using a T3xy value configured by the base station.

For reference, if the USIM 1 UE 1f-02 no longer has a preference for a temporary UE capability restriction (if the UE has no longer preference for temporary capability restriction), the UE may not include the preference for the temporary UE capability restriction in musim-CapabilityRestriction in a musim-Assistance information element (IE) and transmit the musim-Assistance IE to base station 1 1f-04. That is, when the UE previously has included information A in the musim-Assistance IE but a preference for A is no longer required, the UE may not include the information A in the musim-Assistance IE.

According to an embodiment, in operation 1f-40, base station 1 1f-04 may transmit a predetermined RRC message (e.g., RRCReconfiguration) including RRC configuration information in response to operation 1f-35, based on the temporary UE capability restriction information provided by the USIM 1 UE 1f-02. When the temporary UE capability restriction provided in operation 1f-35 is resolved through the received RRC message, the USIM 1 UE 1f-02 may stop the running T3xx timer in operation 1f-35.

According to an embodiment, in operation 1f-45, the USIM 1 UE 1f-02 may transmit a predetermined RRC message (e.g., RRCReconfigurationComplete) to base station 1 1f-04 in response to the predetermined RRC message received in operation 1f-40.

In the disclosure, when the USIM 1 UE 1f-02 transmits a preference request for SCell release to base station 1 1f-04 via a UE assistance information message, the UE 1f-02 may include information for specifically identifying the SCell in the UE assistance information message and transmit the information to base station 1 1f-04, rather than transmitting, to base station 1 1f-04, SCellIndex to indicate the preference request for SCell release. Since the UE 1f-02 and the base station 1f-04 remember only the most recently transmitted UE assistance information message, when the information for specifically identifying the SCell is included in the UE assistance information message, the base station 1f-04 may use the same SCellIndex for other SCells. Furthermore, when the UE 1f-02 no longer prefers the preference request for SCell release, if the UE 1f-02 transmits a UE assistance information message to base station without including, in the UE assistance information message, the information for specifically identifying the SCell previously included in the UE assistance information message, the base station 1f-04 may identify which SCell is reconfigurable for the UE 1f-02.

In the disclosure, when the USIM 1 UE 1f-01 transmits a preference request for SCG release to the base station 1f-04 via a UE assistance information message, the UE may include information for specifically identifying a PSCell operated in the SCG in the UE assistance information message and transmit the information to base station 1 1f-04, rather than transmitting only an indicator indicating the preference request for SCG release to indicate the preference request for SCG release. Accordingly, when the UE 1f-02 no longer prefers a preference request for release of a primary secondary cell group cell (PSCell), if the UE 1f-02 does not include the information for specifically identifying the PSCell in a UE assistance information message and transmits the UE assistance information message not including the information for identification to base station 1 1f-04, the base station may identify which PSCell is reconfigurable for the UE.

FIG. 1G is a signal flow diagram in which a UE (multi-USIM UE, hereinafter referred to as a MUSIM UE) supporting multiple universal subscriber identity modules (USIMs) requests and/or provides temporary UE capability restrictions from and/or to a base station according to a configuration of the base station according to an embodiment.

Referring to FIG. 1G, a MUSIM UE 1g-01 according to an embodiment may be referred to as a UE supporting multiple USIMs in a single device. In the disclosure, for the sake of description, a description based on a dual-USIM UE supporting two USIMs is provided. However, this merely corresponds to an example and the disclosure is not limited thereto.

For example, the MUSIM UE 1g-01 may be referred to as a USIM 1 UE 1g-02 when operating in USIM 1, and may be referred to as a USIM 2 UE 1g-03 when operating in USIM 2. In this case, base stations 1g-04 and 1g-05 associated with the USIMs, respectively, may recognize or identify the USIM 1 UE 1g-02 and the USIM 2 UE 1g-03 as separate UEs, rather than the MUSIM UE 1g-01 which is operated in the same device.

According to an embodiment, the USIM 1 UE 1g-02 and the USIM 2 UE 1g-03 may share and use hardware capability of the MUSIM UE 1g-01. Therefore, when the USIM 1 UE 1g-02 and the USIM 2 UE 1g-03 simultaneously transmit and/or receive signals with base station 1 1g-04 and base station 2 1g-05, capability of each USIM UE may be temporarily restricted by each other.

According to an embodiment, in operation 1g-10, the USIM 1 UE 1g-02 may establish an RRC connection with base station 1 1g-04 and be in an RRC-connected mode (RRC_CONNECTED).

According to an embodiment, in operation 1g-11, the USIM 2 UE 1g-03 may establish an RRC connection with base station 2 1g-05 and be in an RRC-connected mode (RRC_CONNECTED).

According to an embodiment, in operation 1g-15, the USIM 1 UE 1g-02 may transmit, to base station 1 1g-04, a UE capability information message (e.g., UECapabilityInformation) containing or including capability information of the MUSIM UE 1g-01. This may follow at least one of the above embodiments.

According to an embodiment, in operation 1g-20, base station 1 1g-04 may transmit a predetermined RRC message (e.g., an RRCReconfiguration message) including configuration information (e.g., musim-CapabilityRestrictionConfig) that allows the USIM 1 UE 1g-02 to report preferred/required temporary UE capability restriction information to base station 1 1g-04. For example, the musim-CapabilityRestrictionConfig may be included in otherConfig. This may follow at least one of the above embodiments. For example, the UE capability information message (e.g., UECapabilityInformation) may include information described with reference to FIG. 1E (e.g., information on a capability to request or provide detailed temporary UE capability restrictions, or information on a capability to proactively notify of whether there is a temporary UE capability restriction). OtherConfig(musim-CapabilityRestrictionConfig)

According to an embodiment, in operation 1g-25, base station 1 1g-04 may transmit a predetermined RRC message (e.g., RRCReconfiguration) including RRC configuration information to the USIM 1 UE 1g-02. The message (e.g., RRCReconfiguration) may include at least one of the following pieces of RRC configuration information. This may follow at least one of the above embodiments. For example, the message (e.g., RRCReconfiguration) may include information described with reference to FIG. 1E (e.g., a list (sCellToAddModList) for adding or modifying a serving cell (SCell) for a master node (MN), sCellIndex, servingCellConfigCommon, physical cell ID (PCI) information, downlink configuration information and/or uplink configuration information commonly applied to each cell, servingCellConfig, smtc, sCellState, plmn-identityInfoList and/or npn-identityInfoList configuration information, information for adding/modifying a secondary node (SN), cellGroupId, spCellConfig, or a list (sCellToAddModList) for adding or modifying a serving cell (SCell) for a secondary node (SN)). RRCReconfiguration (sCellToAddModList, mrdc-SecondaryCellGroup for DC)

According to an embodiment, in operation 1g-30, the USIM 1 UE 1g-02 may transmit a predetermined RRC message (e.g., RRCReconfigurationComplete) to base station 1 1g-04 in response to the predetermined RRC message received in operation 1g-35.

According to an embodiment, in operation 1g-35, the USIM 1 UE 1g-02 configured to be able to provide information on a temporary capability restriction may transmit, to base station 1 1g-04, a predetermined RRC message (e.g., UEAssistanceInformation) including temporary capability restriction information (e.g., musim-CapabilityRestriction) caused by an operation of the USIM 2 UE 1g-03. This may follow at least one of the above embodiments. For example, the musim-CapabilityRestrictionConfig may include information described with reference to FIG. 1E (e.g., measurement gap requirement restriction request/change configuration information, an indicator or a wait timer Txx value indicating whether transmission of preference information is allowed, a Txy prohibit timer value that may be applied when preference information on musim-AffectedBandCombList and/or musimForbiddenBandCombList is transmitted, or an indicator indicating presence or absence of a capability to proactively notify of whether there is a temporary UE capability restriction). (UEAssistanceInformation(musim-CapabilityRestriction i.e. detailed SCell/PSCell information)

According to an embodiment, in operation 1g-35, the UE may run a T3xx timer.

According to an embodiment, in operation 1g-40, the USIM 1 UE 1g-02 may transition to an RRC idle mode (e.g., RRC_IDLE) or an RRC inactive mode (e.g., RRC_INACTIVE). For example, the USIM 1 UE 1g-02 may receive an RRC connection release message from base station 1 1g-04, apply the RRC connection release message, and transition to an RRC idle mode or an RRC inactive mode. As another example, the USIM 1 UE 1g-02 may transition to the RRC idle mode autonomously due to a predetermined reason (e.g., a case in which the RRC connection fails to be maintained with the current cell due to a radio link failure).

According to an embodiment, when the T3xx timer is running in operation 1g-41, the USIM UE 1 1g-02 may propose or trigger to stop the T3xx timer. For example, the UE may stop the T3xx timer while performing operations required to transition to the RRC idle mode or the RRC inactive mode (i.e., before actually transitioning to the RRC idle mode or the RRC inactive mode). For example, in a case where the UE does not stop the running T3xx timer and continues to run same, if the T3xx timer expires, the UE may apply the temporary UE capability information indicated in operation 1g-35, regardless of a configuration of the base station. Therefore, the UE stops the running T3xx timer in order to prevent occurrence of a different understanding of an RRC configuration with a base station connected later (a mismatch between the UE and the network). That is, the UE may stop the running T3xx timer so as to be configured with RRC configuration information common to a base station connected later.

FIG. 1H is a signal flow diagram in which a UE (multi-USIM UE, hereinafter referred to as a MUSIM UE) supporting multiple universal subscriber identity modules (USIMs) requests and/or provides temporary UE capability restrictions from and/or to a base station according to a configuration of the base station according to an embodiment.

Referring to FIG. 1H, a MUSIM UE 1h-01 according to an embodiment may be referred to as a UE supporting multiple USIMs in a single device. In the disclosure, for the sake of description, a description based on a dual-USIM UE supporting two USIMs is provided. However, this merely corresponds to an example and the disclosure is not limited thereto.

For example, the MUSIM UE 1h-01 may be referred to as a USIM 1 UE 1h-02 when operating in USIM 1, and may be referred to as a USIM 2 UE 1h-03 when operating in USIM 2. In this case, base stations 1h-04 and 1h-05 associated with the USIMs, respectively, may recognize or identify the USIM 1 UE 1h-02 and the USIM 2 UE 1h-03 as separate UEs, rather than the MUSIM UE 1h-01 which is operated in the same device.

According to an embodiment, the USIM 1 UE 1h-02 and the USIM 2 UE 1h-03 may share and use hardware capability of the MUSIM UE 1h-01. Therefore, when the USIM 1 UE 1h-02 and the USIM 2 UE 1h-03 simultaneously transmit and/or receive signals with base station 1 1h-04 and base station 2 1h-05, capability of each USIM UE may be temporarily restricted by each other.

According to an embodiment, in operation 1h-10, the USIM 1 UE 1h-02 may establish an RRC connection with base station 1 1h-04 and be in an RRC-connected mode (RRC_CONNECTED).

According to an embodiment, in operation 1h-11, the USIM 2 UE 1h-03 may establish an RRC connection with base station 2 1h-05 and be in an RRC-connected mode (RRC_CONNECTED).

According to an embodiment, in operation 1h-15, the USIM 1 UE 1h-02 may transmit, to base station 1 1h-04, a UE capability information message (e.g., UECapabilityInformation) including capability information of the MUSIM UE 1h-01. This may follow at least one of the above embodiments. For example, the UE capability information message (e.g., UECapabilityInformation) may include information described with reference to FIG. 1E (e.g., information on a capability to request or provide detailed temporary UE capability restrictions, or information on a capability to proactively notify of whether there is a temporary UE capability restriction). (UECapabilityInformation(support of signaling of UE capability restrictions, nr-NeedForGap-Reporting-r16)

Additionally, the UE capability information message (e.g., UECapabilityInformation) may include at least some of the following capability information.
- nr-NeedForGap-Reporting-r16
   * An indicator indicating a capability of the UE to report a measurement gap requirement for an NR target to the base station in response to a network configuration RRC message (indicates whether the UE supports reporting the measurement gap requirement information for NR target in the UE response to a network configuration RRC message)
- musim-NeedForGap-Reporting
   * An indicator indicating a capability of the UE to report a preferred measurement gap requirement for an NR target to the base station through a UE assistance information message. In a case where the indicator (e.g., musim-NeedForGap-Reporting) is separately included in a message (e.g., UE assistance information message), only a UE supporting nr-NeedForGap-Reporting may include the indicator (e.g., musim-NeedForGap-Reporting) in the UE assistance information message.
   * For reference, the indicator (e.g., musim-NeedForGap-Reporting) may be indicated via a separate message (e.g., a UE assistance information message). As another example, in a case where the UE has a capability to request or provide a detailed temporary UE capability restriction as described in the above embodiment, when the UE supports nr-NeedForGap-Reporting and supports the capability to request or provide a detailed temporary UE capability restriction, the musim-NeedForGap-Reporting capability may be supported.

According to an embodiment, in operation 1h-20, base station 1 1h-04 may transmit a predetermined RRC message (e.g., an RRCReconfiguration message) including configuration information (e.g., musim-CapabilityRestrictionConfig) that allows the USIM 1 UE 1h-02 to report preferred/required temporary UE capability restriction information to base station 1 1h-04. For example, the musim-CapabilityRestrictionConfig may be contained in otherConfig. This may follow at least one of the above embodiments. For example, the musim-CapabilityRestrictionConfig may include information described with reference to FIG. 1E (e.g., measurement gap requirement restriction request/change configuration information, an indicator or a wait timer Txx value indicating whether transmission of preference information is allowed, a Txy prohibit timer value that may be applied when preference information on musim-AffectedBandCombList and/or musimForbiddenBandCombList is transmitted, or an indicator indicating presence or absence of a capability to proactively notify of whether there is a temporary UE capability restriction).

According to an embodiment, in operation 1h-25, base station 1 1h-04 may transmit a predetermined RRC message (e.g., RRCReconfiguration or RRCResume) including RRC configuration information to the USIM 1 UE 1h-02. For example, the message (e.g., RRCReconfiguration or RRCResume) may include at least some of the following RRC configuration information. This may follow at least one of the above embodiments. For example, the message (e.g., RRCReconfiguration or RRCResume) may include information described with reference to FIG. 1E (e.g., a list (sCellToAddModList) for adding or modifying a serving cell (SCell) for a master node (MN), sCellIndex, servingCellConfigCommon, physical cell ID (PCI) information, downlink configuration information and/or uplink configuration information commonly applied to each cell, servingCellConfig, smtc, sCellState, plmn-identityInfoList and/or npn-identityInfoList configuration information, information for adding/modifying a secondary node (SN), cellGroupId, spCellConfig, or a list (sCellToAddModList) for adding or modifying a serving cell (SCell) for a secondary node (SN)). RRCreconfiguration(needForGapsConfigNR)

Additionally, the message (e.g., RRCReconfiguration or RRCResume) may include at least some of the following.
- If the RRCReconfiguration message includes needForGapsConfigNR (if the RRCReconfiguration message includes the needForGapsConfigNR)
   * If the needForGapsConfigNR is set to setup (if needForGapsConfigNR is set to setup)
      ** The UE may identify or consider that the UE has been configured to provide measurement gap requirement information on NR target bands (consider itself to be configured to provide the measurement gap requirement information of NR target bands).
   * Otherwise (else)
      ** The UE may identify or consider that the UE is not configured to provide measurement gap requirement information on NR target bands (consider itself not to be configured to provide the measurement gap requirement information of NR target bands).

According to an embodiment, in operation 1h-30, the USIM 1 UE 1h-02 may transmit a predetermined RRC message (e.g., RRCReconfigurationComplete or RRCResumeComplete) to base station 1 1h-04 in response to the predetermined RRC message received in operation 1h-25. In this case, the UE may transmit a predetermined RRC message including the following information to the base station according to the following procedure (RRCReconfigurationcomplete(NeedForGapsInfoNR)).
- If the UE is configured to provide measurement gap requirement information on NR target bands (if the UE is configured to provide the measurement gap requirement information of NR target bands).
   * If needForGapsConfigNR is included in the RRCReconfiguration message, or if the information most recently transmitted by the UE is different from the current NeedForGapsInfoNR information (for reference, this condition may not be determined when RRCResumeComplete is transmitted)
      ** The UE may include NeedForGapsInfoNR and set content as follows.
         *** The UE may include intraFreq-needForGap and set gap requirement information on intra-frequency measurement for each NR serving cell (include intraFreq-needForGap and set the gap requirement information of intra-frequency measurement for each NR serving cell).
         *** If requestedTargetBandFilterNR is configured, the UE may, for each supportable NR band included in requestedTargetBandFilterNR, include an entry in interFreq-needForGap and set gap requirement information on a corresponding band (for each supported NR band that is also included in requestedTargetBandFilterNR, include an entry in interFreq-needForGap and set the gap requirement information for that band)
         *** Otherwise, the UE may, for each supportable NR band, include an entry in interFreq-needForGap and set gap requirement information on a corresponding band.

According to an embodiment, in operation 1h-35, the USIM 1 UE 1h-02 configured to be able to provide information on a temporary capability restriction may transmit, to base station 1 1h-04, a predetermined RRC message (e.g., UEAssistanceInformation) including temporary capability restriction information (musim-CapabilityRestriction) caused by an operation of the USIM 2 UE 1h-03. This may follow at least one of the above embodiments. (UEAssistanceInformation(musim-CapabilityRestriction i.e. musim-NeedForGapsInfoNR)

Additionally, when at least one of the following conditions is satisfied, the UE according to an embodiment may transmit, to the base station, a UE assistance information message including musim-NeedForGapsInfoNR including measurement gap requirement information on NR target bands preferred to be configured.
- If the UE has a preference for a temporary UE capability restriction,
   * When the base station explicitly configures that the UE is allowed to transmit preferred measurement gap requirement restriction information, and the current musim-NeedForGapsInfoNR is different from measurement gap requirement information on NR target bands that is most recently provided through a predetermined RRC message (RRCResumeComplete, RRCReconfigurationComplete, or UEAssistanceInformation), or
   * When the base station sets up needForGapsConfigNR through RRCResume and/or RRCReconfiguration, and the current musim-NeedForGapsInfoNR is different from measurement gap requirement information on NR target bands that is most recently provided through a predetermined RRC message (RRCResumeComplete, RRCReconfigurationComplete, or UEAssistanceInformation)

According to an embodiment, in a case where the UE does not support nr-NeedForGap-Reporting-r16, the UE may not be able to transmit a UE assistance information message including musim-NeedForGapsInfoNR to the base station. That is, only in a case where the UE supports nr-NeedForGap-Reporting-r16, according to an explicit configuration of the base station or only when a needForGapsConfigNR is set up in RRCReconfiguration and/or RRCResume, the UE may transmit a UE assistance information message including musim-NeedForGapsInfoNR to the base station.

According to an embodiment, the needForGapsInfoNR and the musim-NeedForGapsInfoNR may have substantially the same ASN.1 structure as shown in [Table 3].

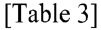

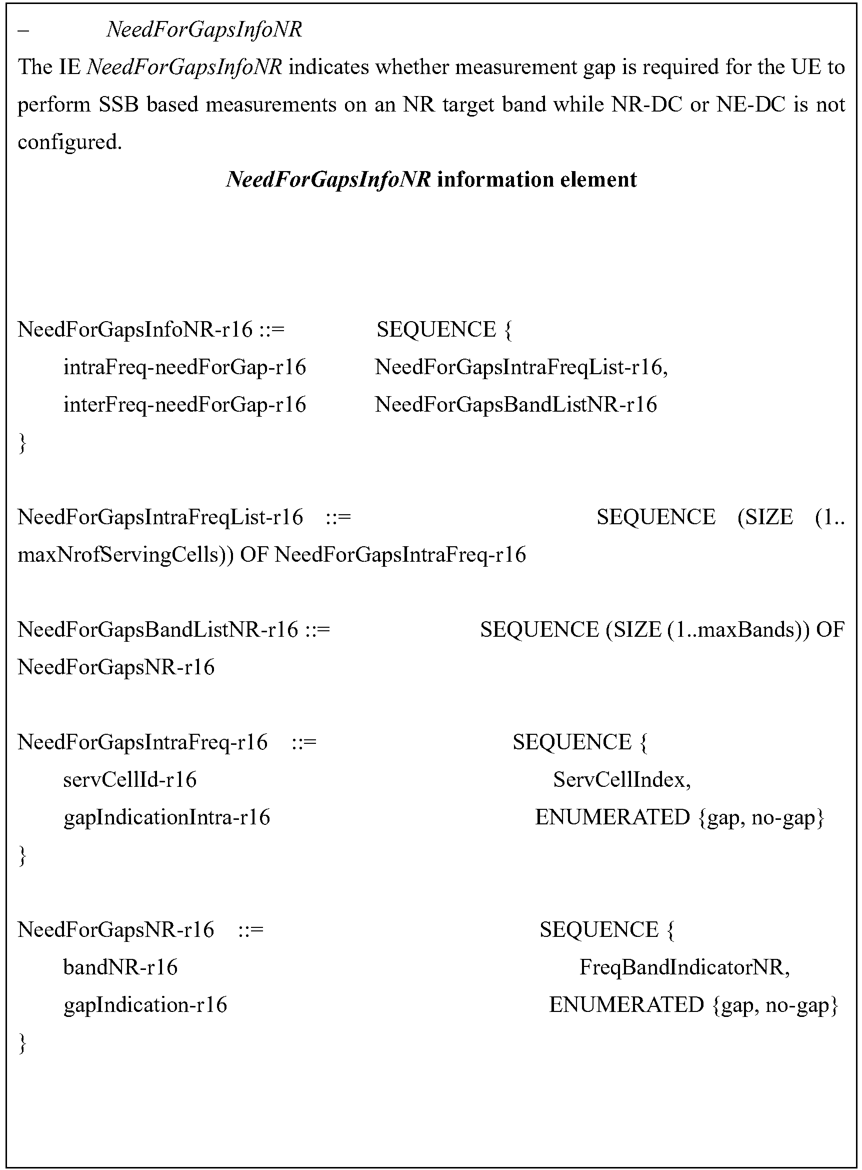

| ***NeedForGapsInfoNR* field descriptions** |
|---|
| ***intraFreq-needForGap*** |

| |
|---|
| Indicates the measurement gap requirement information for NR intra-frequency measurement. |
| ***interFreq-needForGap*** |
| Indicates the measurement gap requirement information for NR inter-frequency measurement. |

| ***NeedForGapsIntraFreq field descriptions*** |
|---|
| ***servCellId*** |
| Indicates the serving cell which contains the target SSB (associated with the initial DL BWP) to be measured. |
| ***gapIndicationIntra*** |
| Indicates whether measurement gap is required for the UE to perform intra-frequency SSB based measurements on the concerned serving cell. Value *gap* indicates that a measurement gap is needed if any of the UE configured BWPs (except the BWP(s) configured with *servingCellMO* associated with NCD-SSB) do not contain the frequency domain resources of the SSB associated to the initial DL BWP (CD-SSB). Value *no-gap* indicates a measurement gap is not needed to measure the SSB associated to the initial DL BWP (CD-SSB) for all configured BWPs (except the BWP(s) configured with *servingCellMO* associated with NCD-SSB), no matter the SSB is within the configured BWP or not. |

| ***NeedForGapsNR* field descriptions** |
|---|
| ***bandNR*** |
| Indicates the NR target band to be measured. |
| ***gapIndication*** |
| Indicates whether measurement gap is required for the UE to perform SSB based measurements on the concerned NR target band while NR-DC or NE-DC is not configured. |
| The UE determines this information based on the resultant configuration of the *RRCReconfiguration* or *RRCResume* message that triggers this response. Value *gap* indicates that a measurement gap is needed, value *no-gap* indicates a measurement gap is not needed. |

For example, the needForGapsConfigNR may have the same ASN.1 structure as shown in [Table 4].

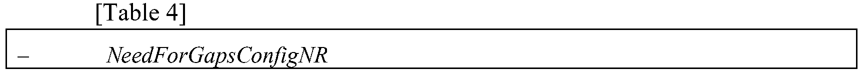

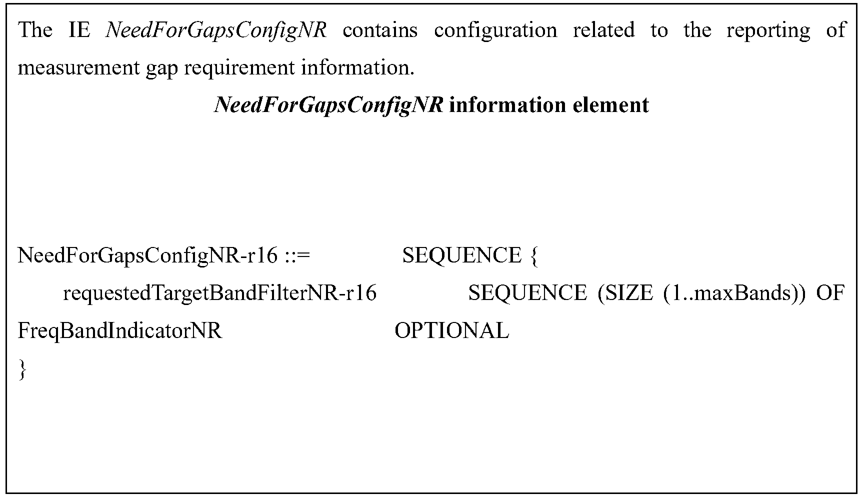

| ***NeedForGapsConfigNR field descriptions*** |
|---|
| ***requestedTargetBandFilterNR*** |
| Indicates the target NR bands that the UE is requested to report the gap requirement information. |

FIG. 1I is a block diagram illustrating an internal structure of a UE according to an embodiment of the disclosure.

Referring to FIG. 1I, the UE according to an embodiment may include a radio frequency (RF) processor 1i-10, a baseband processor 1i-20, a storage 1i-30, and a controller 1i-40.

According to an embodiment, the RF processor 1i-10 may perform functions for transmitting/receiving signals through a radio channel, such as signal band conversion and amplification. For example, the RF processor 1i-10 may up-convert a baseband signal provided from the baseband processor 1i-20 to an RF band signal, may transmit the same through an antenna, and may down-convert an RF band signal received through the antenna to a baseband signal. For example, the RF processor 1i-10 may include a transmission filter, a reception filter, an amplifier, a mixer, an oscillator, a digital-to-analog converter (DAC), and/or an analog-to-digital converter (ADC). Although only one antenna is illustrated in FIG. 1I the UE may include multiple antennas. In addition, the RF processor 1i-10 may include multiple RF chains. Furthermore, the RF processor 1i-10 may perform beamforming. For the beamforming, the RF processor 1i-10 may adjust the phase and magnitude of signals transmitted/received through multiple antennas or antenna elements, respectively. In addition, the RF processor may perform MIMO, and may receive multiple layers when performing an MIMO operation.

According to an embodiment, the baseband processor 1i-20 may perform a function of conversion between a baseband signal and a bitstream according to a physical layer specification of a system. For example, during data transmission, the baseband processor 1i-20 may encode and modulate a transmitted bitstring to generate complex symbols. In addition, during data reception, the baseband processor 1i-20 may demodulate and decode a baseband signal provided from the RF processor 1i-10 to restore a received bitstring. For example, when following the orthogonal frequency division multiplexing (OFDM) scheme, during data transmission, the baseband processor 1i-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1i-20 may split a baseband signal provided from the RF processor 1i-10 at the OFDM symbol level, may restore signals mapped to subcarriers through a fast Fourier transform (FFT) operation, and may restore a received bitstring through demodulation and decoding.

According to an embodiment, the baseband processor 1i-20 and the RF processor 1i-10 may transmit and/or receive a signal as described above. Therefore, the baseband processor 1i-20 and the RF processor 1i-10 may be referred to as a transmitter, a receiver, a transceiver, or a communication unit. Furthermore, at least one of the baseband processor 1i-20 and the RF processor 1i-10 may include multiple communication modules to support multiple different radio access technologies. In addition, at least one of the baseband processor 1i-20 and the RF processor 1i-10 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

According to an embodiment, the storage 1i-30 may store data such as a basic program, an application program, and configuration information for an operation of the UE. Particularly, the storage 1i-30 may store information on a second access node configured to perform wireless communication by using a second radio access technology. In addition, the storage 1i-30 may provide the stored data at the request of the controller 1i-40.

According to an embodiment, the controller 1i-40 may control the overall operation of the UE. For example, the controller 1i-40 may transmit/receive signals through the baseband processor 1i-20 and the RF processor 1i-10. In addition, the controller 1i-40 records data in the storage 1i-30 and reads the data from the storage 1i-30. To this end, the controller 1i-40 may include at least one processor. For example, the controller 1i-40 may include a communication processor (CP) configured to perform control for communication, and an application processor (AP) configured to control upper layers such as application programs.

FIG. 1J is a block diagram illustrating a structure of an NR base station according to an embodiment of the disclosure.

Referring to FIG. 1J, the base station may include an RF processor 1j-10, a baseband processor 1j-20, a backhaul communicator 1j-30, a storage 1j-40, and a controller 1j-50.

According to an embodiment, the RF processor 1j-10 may perform functions for transmitting/receiving signals through a radio channel, such as signal band conversion and amplification. For example, the RF processor 1j-10 may up-convert a baseband signal provided from the baseband processor 1j-20 to an RF band signal, may transmit the same through an antenna, and may down-convert an RF band signal received through the antenna to a baseband signal. For example, the RF processor 1j-10 may include a transmission filter, a reception filter, an amplifier, a mixer, an oscillator, a DAC, and an ADC. Although only one antenna is illustrated in FIG. 1J, the first access node may include multiple antennas. In addition, the RF processor 1j-10 may include multiple RF chains. Furthermore, the RF processor 1j-10 may perform beamforming. For the beamforming, the RF processor 1j-10 may adjust the phase and magnitude of each of signals transmitted and received through multiple antennas or antenna elements. The RF processor 1j-10 may transmit one or more layers to perform a downward MIMO operation.

According to an embodiment, the baseband processor 1j-20 may perform a function of conversion between a baseband signal and a bitstream according to a physical layer specification of a first wireless access technology. For example, during data transmission, the baseband processor 1j-20 may encode and modulate a transmitted bitstring to generate complex symbols. In addition, during data reception, the baseband processor 1j-20 may demodulate and decode a baseband signal provided from the RF processor 1j-10 to restore a received bitstring. For example, when following the OFDM scheme, during data transmission, the baseband processor 1j-20 may encode and modulate a transmitted bitstring to generate complex symbols, may map the complex symbols to subcarriers, and may configure OFDM symbols through an IFFT operation and CP insertion. In addition, during data reception, the baseband processor 1j-20 may split a baseband signal provided from the RF processor 1j-10 at the OFDM symbol level, may restore signals mapped to subcarriers through FFT operation, and may restore a received bitstring through demodulation and decoding. The baseband processor 1j-20 and the RF processor 1j-10 may transmit and receive signals as described above. Therefore, the baseband processor 1j-20 and the RF processor 1j-10 may be referred to as a transmitter, a receiver, a transceiver, or a communication unit.

According to an embodiment, the backhaul communication unit 1j-30 may provide an interface for performing communication with other nodes within a network. That is, the backhaul communication unit 1j-30 may convert bitstrings transmitted from the main gNB to other nodes (for example, auxiliary gNB, core network) to physical signals, and may convert physical signals received from the other nodes to bitstrings.

According to an embodiment, the storage 1ij40 may store basic programs, application programs, and data, such as configuration information, for operation of the main base station. In particular, the storage 1j-40 may store information on bearers allocated to the connected UE, measurement results reported from the connected UE, and the like. In addition, the storage 1j-40 may store information serving as criteria for determining whether to provide multi-connection to a UE or to suspend same. In addition, the storage 1j-40 may provide the stored data at the request of the controller 1j-50.

According to an embodiment, the controller 1j-50 may control the overall operation of the main base station. For example, the controller 1j-50 transmits/receives signals through the baseband processor 1j-20 and the RF processor 1j-10 or through the backhaul communication unit 1j-30. In addition, the controller1j-50 records data in the storage 1j-40 and reads the data from the storage 1j-40. To this end, the controller 1j-50 may include at least one processor.

The embodiments of the disclosure described and shown in the specification and the drawings are merely particular examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, all embodiment of the disclosure may be partially combined with each other to operate a base station and a terminal.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. In addition, a separate storage device on the communication network may access the device performing embodiments of the disclosure.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. For example, a part or all of an embodiment may be combined with a part or all of one or more other embodiments, and it is natural that an implementation of such combination also corresponds to an embodiment proposed by the disclosure. Therefore, the scope of the disclosure should not be defined as being limited to the embodiments set forth herein, but should be defined by the appended claims and equivalents thereof.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. Moreover, other variants based on the technical idea of the embodiments may also be implemented in various systems such as FDD LTE, TDD LTE, and 5G or NR systems.

## Claims

1. A method performed by a user equipment (UE) in a wireless communication system, the method comprising:
receiving, from a base station, a radio resource control (RRC) message including needForGapsConfigNR information, wherein the needForGapsConfigNR information includes information on at least one target new radio (NR) band;
in case that the needForGapsConfigNR information is set to setup, identifying that the UE is configured to provide measurement gap information of the at least one target NR band;
transmitting, to the base station, first UEAssistanceInformation including first measurement gap information; and
in case that the UE is configured to provide measurement gap information of the at least one target NR band and current measurement gap information is different from the first measurement gap information, transmitting, to the base station, second UEAssistanceInformation including the current measurement gap information.

2. The method of claim 1, wherein the current measurement gap information is based on a multi-universal subscriber identity module (MUSIM) operation.

3. The method of claim 1, comprising:
transmitting, to the base station, capability information on provision of information on a temporary capability restriction associated with a multi-universal subscriber identity module (MUSIM); and
receiving, from the base station, configuration information on the temporary capability restriction,
wherein the configuration information on the temporary capability restriction comprises information on a list of candidate bands.

4. The method of claim 1, comprising:
in case that the second UEAssistanceInformation including information on a temporary capability restriction associated with a multi-universal subscriber identity module (MUSIM) is transmitted to the base station, starting a timer associated with the temporary capability restriction; and
in case that an RRC release message is received from the base station, stopping the timer.

5. A user equipment (UE) in a wireless communication system, the UE comprising:
a transceiver; and
a controller coupled with the transceiver,
wherein the controller is configured to:
receive, from a base station, a radio resource control (RRC) message including needForGapsConfigNR information, wherein the needForGapsConfigNR information includes information on at least one target new radio (NR) band;
in case that the needForGapsConfigNR information is set to setup, identify that the UE is configured to provide measurement gap information of the at least one target NR band;
transmit, to the base station, first UEAssistanceInformation including first measurement gap information; and
in case that the UE is configured to provide measurement gap information of the at least one target NR band and current measurement gap information is different from the first measurement gap information, transmit, to the base station, second UEAssistanceInformation including the current measurement gap information.

6. The UE of claim 5, wherein the current measurement gap information is based on a multi-universal subscriber identity module (MUSIM) operation.

7. The UE of claim 5, wherein the controller is configured to:
transmit, to the base station, capability information on provision of information on a temporary capability restriction associated with a multi-universal subscriber identity module (MUSIM); and
receive, from the base station, configuration information on the temporary capability restriction, and
wherein the configuration information on the temporary capability restriction comprises information on a list of candidate bands.

8. The UE of claim 5, wherein the controller is configured to:
in case that the second UEAssistanceInformation including information on a temporary capability restriction associated with a multi-universal subscriber identity module (MUSIM) is transmitted to the base station, start a timer associated with the temporary capability restriction; and
in case that an RRC release message is received from the base station, stop the timer.

9. A method performed by a base station in a wireless communication system, the method comprising:
transmitting, to a user equipment (UE), a radio resource control (RRC) message including needForGapsConfigNR information, wherein the needForGapsConfigNR information includes information on at least one target new radio (NR) band, and the needForGapsConfigNR information is set to setup;
receiving, from the UE, first UEAssistanceInformation including first measurement gap information; and
in case that current measurement gap information is different from the first measurement gap information, receiving, from the UE, second UEAssistanceInformation including the current measurement gap information,
wherein provision of measurement gap information of the at least one target NR band is based on the needForGapsConfigNR information.

10. The method of claim 9, wherein the current measurement gap information is based on a multi-universal subscriber identity module (MUSIM) operation.

11. The method of claim 9, comprising:
receiving, from the UE, capability information on provision of information on a temporary capability restriction associated with a multi-universal subscriber identity module (MUSIM); and
transmitting, to the UE, configuration information on the temporary capability restriction,
wherein the configuration information on the temporary capability restriction comprises information on a list of candidate bands.

12. The method of claim 9, wherein, in case that the second UEAssistanceInformation including information on a temporary capability restriction associated with a multi-universal subscriber identity module (MUSIM) is received from the UE, a timer associated with the temporary capability restriction is started, and
wherein, in case that an RRC release message is transmitted to the UE, the timer is stopped.

13. A base station in a wireless communication system, the base station comprising:
a transceiver; and
a controller coupled with the transceiver,
wherein the controller is configured to:
transmit, to a user equipment (UE), a radio resource control (RRC) message including needForGapsConfigNR information, wherein the needForGapsConfigNR information includes information on at least one target new radio (NR) band, and the needForGapsConfigNR information is set to setup;
receive, from the UE, first UEAssistanceInformation including first measurement gap information; and
in case that current measurement gap information is different from the first measurement gap information, receive, from the UE, second UEAssistanceInformation including the current measurement gap information, and
wherein provision of measurement gap information of the at least one target NR band is based on the needForGapsConfigNR information.

14. The base station of claim 13, wherein the controller is configured to:
receive, from the UE, capability information on provision of information on a temporary capability restriction associated with a multi-universal subscriber identity module (MUSIM); and
transmit, to the UE, configuration information on the temporary capability restriction,
wherein the configuration information on the temporary capability restriction comprises information on a list of candidate bands, and
wherein the current measurement gap information is based on a multi-universal subscriber identity module (MUSIM) operation.

15. The base station of claim 13, wherein, in case that the second UEAssistanceInformation including information on a temporary capability restriction associated with a multi-universal subscriber identity module (MUSIM) is received from the UE, a timer associated with the temporary capability restriction is started, and
wherein, in case that an RRC release message is transmitted to the UE, the timer is stopped.
